# EUROPÄISCHE PATENTSCHRIFT

(11) **EP 2 780 253 B1**
(45) Veröffentlichungstag und Bekanntmachung des Hinweises auf die Patenterteilung: **09.06.2021**
(21) Anmeldenummer: 12778285.2
(22) Anmeldetag: 15.10.2012
(51) Int. Cl.: B65D 71/50, B65B 53/06, B31D 3/04, B31D 1/02, B31D 1/00, B31D 1/06

(54) **VERFAHREN ZUM HERSTELLEN VON VERPACKUNGEN UND ZUGEHÖRIGE VORRICHTUNG**
METHOD FOR PRODUCING PACKS AND ASSOCIATED DEVICE
PROCÉDÉ DE FABRICATION D'EMBALLAGES ET DISPOSITIF ASSOCIÉ

(30) Priorität: 17.11.2011 DE 102011055462
(43) Veröffentlichungstag der Anmeldung: 24.09.2014
(73) Patentinhaber: LEMO Maschinenbau GmbH, 53859 Niederkassel-Mondorf (DE)
(72) Erfinder: KETTWIG, Marco, 53844 Troisdorf (DE)
(74) Vertreter: Greif, Thomas
(86) Internationale Anmeldenummer: PCT/EP2012/070396
(87) Internationale Veröffentlichungsnummer: WO 2013/072148

(56) Entgegenhaltungen:
- DE-A1-102010 012 559
- FR-A1- 2 362 769
- FR-A1- 2 733 733

## Beschreibung

Die Erfindung betrifft ein Verfahren zum Herstellen von zumindest ein Fach aufweisenden Verpackungen aus Kunststofffolie für Verpackungsgüter, insbesondere für Behälter. Des Weiteren betrifft die Erfindung eine Vorrichtung zum Herstellen von zumindest ein Fach aufweisenden Verpackungen aus Kunststofffolie für Verpackungsgüter, insbesondere für Behälter.

Aus der US 2011/0056175 A1 ist ein Verfahren zum Verpacken von Waren bekannt. Gemäß dem Verfahren werden zwei Schrumpffolien taktweise in Querrichtung so miteinander verbunden, dass sich mehrere Öffnungen ausbilden. Anschließend werden die Folien perforiert und jeweils eine Ware in eine Öffnung eingeschoben. Nach dem Trennen der Folien an den Perforationen werden die Waren aufweisenden Verpackungen erhitzt, so dass eine Verpackung mit eingeschrumpften Waren entsteht.

Nachteilig aus dem Stand der Technik bekannten Verfahren ist, dass es ausschließlich möglich ist, die Verpackungen taktweise herzustellen, da die Folienlagen in Querrichtung taktweise verschweißt werden. Ferner ist nachteilig, dass teure und aufwendige Maschinen zur Verwendung des Verfahrens benutzt werden müssen.

Ein gattungsgemäßes Verfahren und eine gattungsgemäße Vorrichtung zum Bilden eines Trägers für eine Artikelgruppe (Verpackungsgüter) ist aus der US 3 710 535 A bekannt. Der Träger besteht aus Bahnen, die sich um die einzelnen Artikel der Gruppe erstrecken. Es ist eine Vorrichtung zum Zuführen eines Paares innerer Bahnen zwischen zwei Reihen der Gruppe und eine Struktur zum Formen der Bahnen vorgesehen, so dass jede Bahnhälfte die Artikel jeder Reihe umgibt. Diese Bahnen werden an den Punkten beziehungsweise Linien, an denen die Artikel aneinander liegen, zusammengefügt. Es ist auch eine Vorrichtung vorgesehen, um ein Paar von Bahnen entlang der Außenseiten jeder Reihe zuzuführen und um solche äußeren Bahnen mit den inneren Bahnen zu verbinden. Es ist eine Struktur zum Strecken der äußeren Bahnen vorgesehen, wenn diese an den inneren Bahnen haften, um sich auf die Speichereigenschaften der die Bahnen bildenden thermoplastischen Harze zu stützen und sicherzustellen, dass die Artikel, die die Schlaufen einschließen, genau zu den Artikeln passen.

Ein Verfahren zum Herstellen von Verpackungen aus Kunststofffolie gemäß des Präambel des Anspruchs 1 ist aus DE102010012559 bekannt. Aufgabe der Erfindung ist es daher, ein Verfahren und eine zugehörige Vorrichtung zu schaffen, mittels der jeweils einfach, kostengünstig und schnell Verpackungen aus Kunststofffolie für Verpackungsgüter hergestellt werden können.

Die Aufgabe wird durch die Merkmale der beiden unabhängigen Patentansprüche 1 und 13 gelöst.

Vorteilhaft ist, dass aufgrund des Verschweißens der Folien in Längsrichtung auch ein kontinuierliches, das heißt ein nicht taktweises, Verschweißen der Lagen aus Kunststofffolie möglich ist. Dadurch ist auch eine Herstellung von Verpackungen mit hoher Geschwindigkeit und gleichzeitig guter Qualität möglich. Ferner ist im Rahmen der Herstellung beim Längsschweißen der Lagen eine gleiche Wiederholgenauigkeit der hergestellten Verpackungen möglich. Daneben sind Fächer mit einer beliebigen Breite und Höhe herstellbar. Ferner ist es möglich, Verpackungen mit einem Fach bis nahezu unendlich vielen Fächern herzustellen. Indem die Verpackungen in Längsrichtung auf beispielsweise eine Rolle, wie eine Aufwickelrolle, aufgerollt werden, ist es weiterhin vorteilhaft möglich, Lagen aus Kunststofffolie mit einem geringen Schrumpfindex zu verwenden, da bei dem Befüllen der jeweiligen Verpackungen mit Produkt die Verpackungen gerade statt schräg um die jeweiligen zu verpackenden Produkte herum geführt werden. Durch den geringen Schrumpfindex ist es auch weiterhin möglich, dass es zu einer Verringerung der Schweißnahtschrumpfung beim Schrumpfen der Lagen kommt. Vorteilhaft ist es weiterhin möglich, dass die Lagen im Rahmen der Herstellung der Verpackung erst in der Vorrichtung bedruckt werden. Dabei ist es auch möglich, die für das Bedrucken üblicherweise notwendige vorgelagerte Coronavorbehandlung direkt in den Herstellungsprozess zu integrieren. Des Weiteren ist es vorteilhaft möglich, dass eine einzige Folienlage oder zwei Folienlagen verwendet werden, die jeweils passend in einzelne Lagen umgefaltet und/oder getrennt werden. Insbesondere bei der Verwendung von einer einzigen Folienlage, die in mehrere Lagen zum Schweißen in der Vorrichtung umgefaltet und anschließend getrennt wird, ist es möglich, rapportgenau die jeweiligen Lagen beim Verschweißen in Längsrichtung aufeinander zu positionieren, so dass die jeweils bedruckten Bereiche rapportgenau aufeinander liegen. Aufgrund dieser Zuführung aus einer einzigen Folienlage ist somit eine rapportunabhängige Zuführung der jeweils daraus hergestellten Lagen möglich. Die längsverschweißten Lagen bilden jeweils Verpackungen, die auf einer Aufwickelrolle oder dergleichen zu einer Verpackungsreihe aufgerollt werden können. Dabei ist es aufgrund der Aufwicklung in Längsrichtung möglich, dass gegenüber der in Querrichtung hergestellten Verpackungen eine größere Anzahl von Verpackungen auf jeweils eine Aufwickelrolle passen. Ferner ist es möglich, die Maschinenkosten mittels der Erfindung zu reduzieren, da weniger Maschinenteile in der Vorrichtung gemäß der Erfindung verwendet werden. Dadurch reduzieren sich auch vorteilhaft die Herstellungskosten für eine erfindungsgemäße Verpackung und somit auch für das Herstellungsverfahren an sich.

Zunächst wird nachfolgend als eine bevorzugte vorteilhafte Ausgestaltung der Erfindung das Befestigen zumindest einer äußeren Lage an den beiden schon verschweißten inneren Lagen mittels eines Schweißverfahrens beschrieben:
Die äußere Lage wird bevorzugt mit zumindest einer Längsschweißnaht mit den schon verschweißten inneren Lagen verschweißt, wobei die beiden schon vorher verschweißten inneren Lagen mit Hilfe zumindest eines Mittels voneinander getrennt werden, um ein Verschweißen der beiden inneren Lagen zu verhindern.

Als Mittel wird bevorzugt ein Trennlack verwendet oder als Mittel wird bevorzugt ein mechanisches Trennmittel, insbesondere eine Isolierfahne, verwendet.

Die Innenseite der einen inneren Lage und/oder die Innenseite der zweiten inneren Lage werden oder sind bevorzugt mit Trennlack beschichtet. Der Trennlack verhindert dabei das Verschweißen der inneren Lagen in dem Bereich, in den er auf die inneren Lagen aufgebracht ist, wenn die zumindest eine äußere Lage mit der zugehörigen, benachbarten inneren Lage verschweißt wird.

Die Isolierfahne wird bevorzugt vor dem Verschweißen der beiden inneren Lagen zwischen die beiden inneren Lagen eingebracht. Mittels der zumindest einen Isolierfahne, die zwischen den beiden innen Lagen eingebracht ist, wird ein Verschweißen der beiden inneren Lagen im Bereich der jeweiligen Isolierfahne beim Verschweißen in Längsrichtung der zumindest einen äußeren Lage mit der zugehörigen inneren Lage verhindert.

Bevorzugt wird eine Isolierfahne aus Teflon verwendet. Diese kann als Teflonband oder dergleichen ausgebildet sein.

Die zu verschweißenden Lagen werden bevorzugt mittels zumindest eines Längsschweißbalkens oder mittels zumindest eines Längsschweißbalkenpaares verschweißt. Während der Herstellung der Verpackungen ist der Längsschweißbalken oder das Längsschweißbalkenpaar bevorzugt dauerbeheizt. Je nach zu verschweißender Art von Lagen aus Kunststofffolie, beispielsweise Kunststofffolienlagen aus Polyethylen oder dergleichen, wird jeweils mittels einer geeigneten Anzahl an Längsschweißbalken oder Längsschweißbalkenpaaren die für eine Erzeugung einer Längsschweißnaht notwendige Schweißwärme erzeugt. Bevorzugt werden zur Herstellung von Verpackungen Längsschweißbalkenpaare eingesetzt. Bevorzugt werden ein, zwei, drei, vier, fünf oder sechs Längsschweißbalkenpaare für das Längsschweißen der jeweiligen spezifischen Lagen verwendet. Bevorzugt werden für das Verschweißen der beiden inneren Lagen eins, zwei oder drei Längsschweißbalkenpaare und für das Verschweißen der jeweiligen äußeren Lage mit zugehöriger innerer Lage jeweils auch eins, zwei oder drei Längsschweißbalkenpaare für jede zu schweißende Längsschweißnaht verwendet. Für jede Längsschweißnaht der Verpackung wird diese Anzahl an Längsschweißbalkenpaaren verwendet. Für parallel nebeneinander liegende Längsschweißnähte werden mehrere Längsschweißbalkenpaare in der vorhergehend beschriebenen bevorzugten Anzahl parallel nebeneinander angeordnet, so dass bei zwei Schweißnähten eine doppelte Anzahl an Längsschweißbalkenpaaren, bei drei Schweißnähten die dreifache Anzahl und so weiter in einer Vorrichtung verwendet werden.

Besonders bevorzugt werden die Lagen in einem Schweißturm verschweißt, in dem die Längsschweißbalken so angeordnet sind, dass die zu verschweißenden Lagen senkrecht zum Boden durch die jeweiligen Längsschweißbalkenpaare zum Verschweißen geführt werden. Der Boden ist der Bereich, auf dem eine Vorrichtung zur Herstellung von Verpackungen und Anwendung des Herstellungsverfahrens steht. Dieser Boden ist horizontal angeordnet. Alternativ oder ergänzend ist es auch möglich, die zumindest eine äußere Lage mit der zugehörigen inneren Lage mittels eines anderen Mittels, beispielsweise mittels eines Lasers, einer Schweißscheibe oder dergleichen, zu verschweißen.

Die zu verschweißenden Lagen werden bevorzugt in einer Bewegungsrichtung senkrecht zur Zuführrichtung der zu verschweißenden inneren Lagen mittels des Längsschweißbalkens oder des Längsschweißbalkenpaares verschweißt. Bei einer Anordnung des zumindest einen Längsschweißbalkens oder des zumindest einen Längsschweißbalkenpaares senkrecht zur Zufuhrrichtung der zu verschweißenden inneren Lagen bildet sich ein Schweißturm aus, in dem die zugehörige zumindest eine äußere Lage mit der jeweils zugehörigen inneren Lage verschweißt wird. Die Zuführrichtung ist dabei parallel zum Boden, auf dem die Vorrichtung zur Herstellung der Verpackungen steht, und somit in horizontale Richtung ausgerichtet.

Nachfolgend wird ein alternatives Herstellungsverfahren in einer anderen vorteilhaften Ausgestaltung beschrieben, bei der anstatt zu schweißen verleimt wird:
Die äußere Lage wird bevorzugt mit den schon verschweißten inneren Lagen verleimt, so dass die äußere Lage an einer der inneren Lagen befestigt ist.

Die äußere Lage wird bevorzugt vor dem Verleimen mit einem Reaktivklebstoff, vorzugsweise mit einem Hotmelt, beleimt oder die äußere Lage ist bevorzugt mit einem Reaktivklebstoff, vorzugsweise mit einem Hotmelt, beleimt.

Bei dem Verbinden der äußeren Lage mit der zugehörigen inneren Lage der beiden schon verschweißten inneren Lagen ist kein weiterer Schweißvorgang notwendig, wenn die äußere Lage mit den beiden inneren Lagen verleimt worden ist.

Mittels den beiden vorhergehend beschriebenen Herstellungsverfahren (Schweißen und Verleimen) ist es möglich, Verpackungen für Verpackungsgüter kontinuierlich oder getaktet, das heißt diskontinuierlich, oder mittels einer Kombination aus beiden, das heißt teilweise getaktet und teilweise kontinuierlich, herzustellen, wobei die Verpackungen bevorzugt ein- oder zweireihig ausgeführt sind. Die hergestellten Verpackungen gemäß der Erfindung sind auch unter den Begriffen Gebinde, Kettensleeves oder Schrumpfsleeves bekannt.

Bei einer zweireihigen Verpackung sind die Verpackungsgüter, beispielsweise Behälter in Form von Flaschen oder dergleichen, in 2 x 2, 2 x 3, 2 x 4 Anordnung oder dergleichen in einer Verpackung angeordnet. In einer 2 x 3 Verpackung sind beispielsweise sechs Verpackungsgüter verpackt, wobei jeweils ein Verpackungsgut in jeweils einem der sechs Fächer der Verpackung verpackt ist.

Bei einer einreihigen Verpackung sind die Verpackungsgüter jeweils in einer einzigen Reihe, das heißt in einer Anordnung 1 x 1, 1 x 2, 1 x 3 oder dergleichen in der Verpackung angeordnet.

In einer gemäß der Erfindung hergestellten Verpackung lassen sich Verpackungsgüter in einer beliebigen Größe und Form verpacken. So ist es möglich, jeweils einen Behälter in jeweils einem Fach des Verpackung zu verpacken, wobei der Behälter eine runde, eckige, zylindrische Form oder eine beliebige andere Formen aufweisen kann. So ist es beispielsweise auch möglich, bauchige Ausbildungen von Behältern oder dergleichen in der jeweiligen Verpackung zu verpacken.

Nachfolgend wird die Herstellung einer einreihigen Verpackung im Detail beschrieben:
Die beiden inneren Lagen werden bevorzugt vor dem Befestigen von äußerer Lage mit zugehöriger innerer Lage jeweils im Bereich der Längsschweißnaht der beiden inneren Lagen geschnitten, so dass diese geschnittenen inneren Lagen einen Teil der inneren Lagen bilden. Der Teil der inneren Lagen weist jeweils ein Fach für ein Verpackungsgut auf. Bevorzugt werden mehrere Teile erzeugt, so dass die später hergestellte Verpackung mehrere Fächer in einer einzigen Reihe aufweist.

In die geschnittenen inneren Lagen wird bevorzugt vor dem Befestigen von äußerer Lage mit zugehöriger innerer Lage jeweils eine Seitenfalte im Bereich der geschnittenen Längsschweißnaht der geschnittenen inneren Lagen eingebracht.

Die zumindest zwei jeweils die Seitenfalte im Bereich der Längsschweißnaht aufweisenden geschnittenen inneren Lagen werden bevorzugt vor dem Befestigen von äußerer Lage mit zugehöriger innerer Lage jeweils zueinander auf eine herzustellende Breite der Verpackung positioniert. Es ist somit möglich, diese geschnittenen inneren Lagen so in einer nebeneinander liegenden Reihe bezogen auf die Breite der herzustellenden Verpackung anzuordnen, dass genauso so viele dieser geschnittenen inneren Lagen vorhanden sind, wie Fächer für die einreihige Verpackungen vorgesehen sind.

Die geschnittenen inneren Lagen werden bevorzugt vor dem Befestigen von äußerer Lage mit zugehöriger innerer Lage jeweils vorgeöffnet. Dieses ist notwendig, damit das später in das jeweilige Fach einzusetzende Verpackungsgut auch eingesetzt werden kann, da während des Verleimens oder des Schweißens die Form der einreihigen Verpackung vorgeben wird.

Besonders bevorzugt werden zumindest zwei äußere Lagen mit jeweils zumindest zwei inneren Lagen mittels des Verfahrens gemäß der Erfindung verschweißt. Mittels dieser vier aufeinanderliegenden Lagen ist es möglich, einreihige oder zweireihige Verpackungen mit einer beliebigen Anzahl von Fächern einfach und kostengünstig herzustellen. Ein solches Verfahren wird nachfolgend unter anderem beschrieben:
Auf der anderen Seite der schon verschweißten Lagen wird bevorzugt zumindest eine zweite äußere Lage aus Kunststofffolie auf die schon verschweißten inneren Lagen aufgelegt und die zweite weitere äußere Lage wird bevorzugt mit der zweiten inneren Lage befestigt, insbesondere verschweißt oder verleimt. Es wird kontinuierlich oder getaktet befestigt.

Die äußeren Lagen werden bevorzugt so aufgelegt, dass vor dem Befestigen von äußerer Lage und zugehöriger innerer Lage beide äußere Lagen aufgelegt sind.

Die Herstellungsvariante, bei der vier Lagen aus Kunststofffolie zur Herstellung einer zweireihigen Verpackung verwendet werden, ist das besonders bevorzugte Herstellungsverfahren gemäß der Erfindung.

Nachfolgend werden weitere bevorzugte vorteilhafte Ausgestaltungen des Herstellungsverfahrens gemäß der Erfindung im Detail beschrieben:
An die Verpackung wird bevorzugt zumindest eine Grifflasche angebracht oder zumindest eine Grifflasche wird bevorzugt in die Lagen eingebracht, insbesondere eingestanzt. Die Grifflasche dient dabei als Tragegriff zum Tragen der Verpackung.

Für zumindest eine Lage wird bevorzugt eine bidirektional schrumpfbare Kunststofffolie verwendet. Dadurch ist es möglich, dass das ) Verpackungsgut im jeweils zugehörigen Fach mittels des Schrumpfens der Kunststofffolie fest, aber noch mittels Kraft lösbar umfasst wird, so dass das Verpackungsgut nicht aus der befüllten Verpackung herausfallen kann.

Parallel zur zu schweißenden Längsschweißnaht der inneren Lagen wird bevorzugt zumindest eine Trennperforation in zumindest eine Lage eingebracht, insbesondere eingestanzt. Bevorzugt ist eine Trennperforation jeweils im Bereich eines Fachs der zweireihigen Verpackung eingebracht. Besonders bevorzugt ist die Trennperforation im Bereich der äußeren Lage im Bereich des jeweiligen Fachs der zweireihigen Verpackung eingebracht. ) Bei einer einreihigen Verpackung ist die Trennperforation bevorzugt zwischen den Fächern eingeordnet.

Es ist mittels einer Trennperforation möglich, dass bei der Entnahme eines Verpackungsgutes aus der Verpackung die Verpackung an der Trennperforation einreißt, so dass das Verpackungsgut gut aus dem Fach oder der Verpackung entnommen werden kann. Das Fach lässt sich dabei leicht öffnen.

Alternativ oder ergänzend ist es möglich, einen Teil eines Fachs als Etikett zu gestalten, so dass bei der Entnahme des Verpackungsgutes aus dem Fach ein Etikett auf dem Verpackungsgut verbleibt. Dieses wird nachfolgend noch im Detail beschrieben.

In die Lagen wird bevorzugt senkrecht zur Längsschweißnaht der inneren Lagen zumindest eine Rapportperforation eingebracht, insbesondere eingestanzt. Mittels der Rapportperforation ist es möglich, mehrere in Längsrichtung hergestellte Verpackungen, die beispielsweise auf einer Aufwickelrolle oder dergleichen aufgewickelt sind, nach dem erneuten Abwickeln gut an der Rapportperforation voneinander zu trennen. Die voneinander getrennten Verpackungen sind dann gut mittels Verpackungsgut befüllbar.

Die Rapportperforation wird bevorzugt mit einem Abstand einer Höhe in die ) Lagen eingebracht. Dadurch ist es möglich, dass jede an einer Rapportperforation abgetrennte Verpackung schon genau die Größe aufweist, die zum Verpacken des jeweiligen Verpackungsgutes notwendig ist.

Die inneren und die äußeren Lagen werden bevorzugt aus einer einzigen Folienlage, insbesondere einer umgefalteten und/oder getrennten Folienlage, hergestellt oder die inneren Lagen werden bevorzugt aus einer Folienlage, insbesondere einer umgefalteten und/oder getrennten Folienlage, und die äußeren Lagen werden bevorzugt aus einer weiteren Folienlage, insbesondere einer umgefalteten und/oder getrennten Folienlage, hergestellt.

Die Folienlage wird bevorzugt von einer Abwickelrolle abgewickelt.

Jeweils ein Teil der äußeren Lage und/oder jeweils ein Teil der inneren Lage ist oder wird bevorzugt als Etikett für das Verpackungsgut gestaltet, wobei beim Herausnehmen des Verpackungsgutes aus der Verpackung das Etikett auf dem Verpackungsgut verbleibt.

Die Form der Etiketten wird bevorzugt jeweils vor dem Längsschweißen eingebracht. Dadurch ist es möglich, einen Reaktivklebstoff oder dergleichen einfach auf die passende Lage im Bereich des Etiketts aufzubringen.

Die Etiketten werden jeweils bevorzugt im Bereich der Fächer angeordnet.

Am Rand eines Etikettes wird bevorzugt eine Perforation oder ein Vorschnitt zum Herausnehmen des Etikettes eingebracht und die Etiketten werden bevorzugt mit einem Reaktivklebstoff auf der Seite der jeweiligen Lage, die in Richtung Verpackungsgut weist, versehen. Bei einem Vorschnitt wird die Kontur eines Etikettes bis auf wenige Haltestege ausgeschnitten.

Wenn das Etikett in dem Bereich eines Fachs angeordnet ist, ist es möglich, ) dass gemäß vorhergehender Beschreibung bei der Entnahme eines Verpackungsgutes aus einem Fach einer Verpackung das Etikett an dem Verpackungsgut haften bleibt. Ferner reißt das Etikett dabei ideal an der Perforation oder dem Vorschnitt heraus.

Nachfolgend wird eine erfindungsgemäße Vorrichtung und deren bevorzugte vorteilhafte Ausgestaltungen im Detail beschrieben. Das Herstellungsverfahren gemäß der Erfindung ist auf der Vorrichtung durchführbar:
) Eine Vorrichtung zum Herstellen von zumindest ein Fach aufweisenden Verpackungen aus Kunststofffolie für Verpackungsgüter, insbesondere für Behälter, weist erfindungsgemäß Mittel zum Durchführen des Verfahrens gemäß einem der Ansprüche 1 bis 27 auf.

In einer vorteilhaften Ausgestaltung weist die Vorrichtung zumindest einen Längsschweißbalken oder zumindest ein Längsschweißbalkenpaar auf. Bevorzugt weist die Vorrichtung eins, zwei, drei, vier, fünf oder sechs Längsschweißbalkenpaare für jede zu schweißende Längsschweißnaht auf. Für parallel nebeneinander zu schweißende Längsschweißnähte verdoppelt, verdreifacht und so weiter sich die notwendige bevorzugt beschriebene Anzahl entsprechend der Anzahl der parallel zu schweißenden Längsschweißnähte. Bei zwei parallel zu schweißenden Längsschweißnähten wird eine doppelte Anzahl, bei drei parallel zu schweißenden Längsschweißnähten wird eine dreifache Anzahl und so weiter verwendet.

In einer weiteren vorteilhaften Ausgestaltung ist die Länge eines Längsschweißbalkens oder die Länge eines Längsschweißbalkens eines Längsschweißbalkenpaares zwischen 200 mm und 300 mm, vorzugsweise 250 mm. Es ist auch möglich größere oder kleinere Abmessungen für die Länge eines Längsschweißbalkens oder die Länge eines Längsschweißbalkens eines Längsschweißbalkenpaares zu verwenden, wenn die Abmessungen einer jeweiligen Verpackung besonders groß oder besonders klein sind.

Bevorzugt fährt um den Längsschweißbalken oder den Längsschweißbalken eines Längsschweißbalkenpaares ein Teflonband. Das Teflonband ist bevorzugt als umlaufendes Endlosband ausgeführt und wird bevorzugt separat angetrieben. Die Bewegungsgeschwindigkeit des Teflonbandes ist bevorzugt kleiner, gleich oder größer, vorzugsweise gleich, der Bewegungsgeschwindigkeit der zu verschweißenden Lagen. Mittels der Anpassung der Bewegungsgeschwindigkeit mittels des separaten Antriebs lässt sich die Schweißnahtqualität anpassen. Bei einer gleichen Bewegungsgeschwindigkeit ist die Nahtqualität, die durch den Längsschweißnahtprozess entsteht, besonders gut.

In einer weiteren vorteilhaften Ausgestaltung ist der Längsschweißbalken oder das Längsschweißbalkenpaar senkrecht zur Zuführrichtung der zu verschweißenden inneren Lagen in der Vorrichtung angeordnet. Bevorzugt sind der oder die Längsschweißbalkenpaare dabei nach Art eines Schweißturms angeordnet, so dass die zu verschweißenden Lagen senkrecht zum Boden, auf dem die Vorrichtung steht, in dem Schweißturm verschweißt werden. Die Zuführrichtung ist bevorzugt in der Vorrichtung parallel zum Boden und somit in horizontaler Richtung.

In einer weiteren vorteilhaften Ausgestaltung weist die Vorrichtung zumindest eine Isolierfahne aus Teflon auf. Die Vorrichtung weist üblicherweise mehrere Isolierfahnen aufgrund der zu schweißenden mehreren Längsschweißnähte auf.

In einer weiteren vorteilhaften Ausgestaltung weist die Vorrichtung zumindest eine Abwickelrolle zur Zuführung zumindest einer Folienlage auf.

In einer weiteren vorteilhaften Ausgestaltung weist die Vorrichtung zumindest ein Faltdreieck auf. Mittels des Faltdreiecks lässt sich eine Folienlage umfalten.

In einer weiteren vorteilhaften Ausgestaltung weist die Vorrichtung einen Aufwickler zum Aufwickeln der hergestellten Verpackungen auf.

Ferner weist die Vorrichtung gemäß der Erfindung auch zumindest eine Wendestange, zumindest ein Vorzugswalzenpaar, zumindest einen passenden Antriebsmotor zum Antrieb des Vorzugswalzenpaares, zumindest eine Umlenkrolle und dergleichen auf. Diese Bauteile sind bei Vorrichtungen zum Schweißen von Lagen aus Kunststofffolie dem Fachmann geläufig und werden nicht im Detail aufgeführt.

Nachfolgend wird eine erfindungsgemäße Verpackung für Verpackungsgüter und deren bevorzugten vorteilhaften Ausgestaltung im Detail beschrieben:
Die erfindungsgemäße Verpackung für Verpackungsgüter, insbesondere für Behälter, ist gemäß der Erfindung mit dem Verfahren gemäß einem der Ansprüche 1 bis 27 hergestellt.

In einer vorteilhaften Ausgestaltung ist die Verpackung eine Umverpackung.

In einer weiteren vorteilhaften Ausgestaltung weist die Verpackung eine dem jeweils zu verpackenden Verpackungsgut angepasste Höhe und eine dem jeweils zu verpackenden Verpackungsgut angepasste Breite auf. So ist es beispielsweise möglich, dass mittels der Verpackung 3-Liter Kanister, 4-Liter Kanister, 5-Liter Kanister oder dergleichen verpackt werden. Ferner ist es möglich, kleine Dosen, beispielsweise Lebensmittelskonserven aus Blech, oder Medikamente, beispielsweise Hustentropfen in einem runden Glas-Behältnis für Privatgebrauch, zu verpacken. Die Abmessungen der jeweiligen Verpackung sind dabei bevorzugt je nach Größe und/oder Form des Verpackungsgutes passend auf das zu verpackende Verpackungsgut angepasst.

In einer weiteren vorteilhaften Ausgestaltung weist die Verpackung eine Höhe von 142 mm bis 162 mm, vorzugsweise 152 mm, und eine Breite von 307 mm bis 347 mm, vorzugsweise 327 mm, auf.

In einer weiteren vorteilhaften Ausgestaltung ist die Verpackung auf einer Aufwickelrolle aufgerollt. Es bildet sich nach dem Aufwickeln von meheren Verpackungen eine Verpackungsreihe aus.

Des Weiteren betrifft die Erfindung eine Verpackungsreihe, wobei die Verpackungsreihe zumindest zwei Verpackungen gemäß einem der Ansprüche 36 bis 38 aufweist. Die Verpackungen sind in einer Verpackungsreihe in Reihe hintereinander in Produktionsrichtung lösbar verbunden angeordnet.

In den Figuren sind bevorzugte Ausführungsformen gemäß der Erfindung dargestellt. Es zeigen
Figur 1: Mehrere zweireihige Verpackungen für Verpackungsgüter aus vier Lagen aus Kunststofffolie mit jeweils sechs Fächern als Verpackungsreihe,
Figur 2: eine Vorrichtung zum Herstellen von zweireihigen Verpackungen mit zwei Faltdreiecken in Vorderansicht,
Figur 3: die Vorrichtung in Ansicht X,
Figur 4: eine Vorrichtung zum Herstellen von zweireihigen Verpackungen mit einem Faltdreieck in Vorderansicht,
Figur 5: die Vorrichtung in Ansicht X,
Figur 6: mehrere einreihige Verpackungen in Form einer Verpackungsreihe,
Figur 7: eine einreihige Verpackung gefüllt mit Flaschen in Vorderansicht,
Figur 8: die einreihige Verpackung in Sicht von unten,
Figur 9: die einreihige Verpackung im Schnitt,
Figur 10: die Verpackung in technischer Zeichnung,
Figur 11: eine Folienlage zur Herstellung einreihiger Verpackungen,
Figur 12: zwei aufeinanderliegende innere Lagen aus Kunststofffolie, Figur 13: eine äußere Lage in Form eines verleimten Streifens auf einer Rolle,
Figur 14: die verschweißten inneren Lagen aus Kunststofffolie,
Figur 15: die geschnittenen und gefalteten Lagen aus Kunststofffolie,
Figur 16: die passend zueinander angeordneten geschnittenen und gefalteten Lagen aus Kunststofffolie,
Figur 17: die inneren Lagen mit jeweils einzelnen auf jeder Seite der inneren Lagen verschweißten äußeren Lagen in Form von Streifen und
Figur 18: die vorgeöffneten inneren Lagen vor dem Verschweißen mit Streifen.

Gleiche Bauteile sind in den Figuren mit gleichen Bezugsziffern versehen und neue Bauteile sind in den Figuren mit neuen Bezugsziffern versehen.

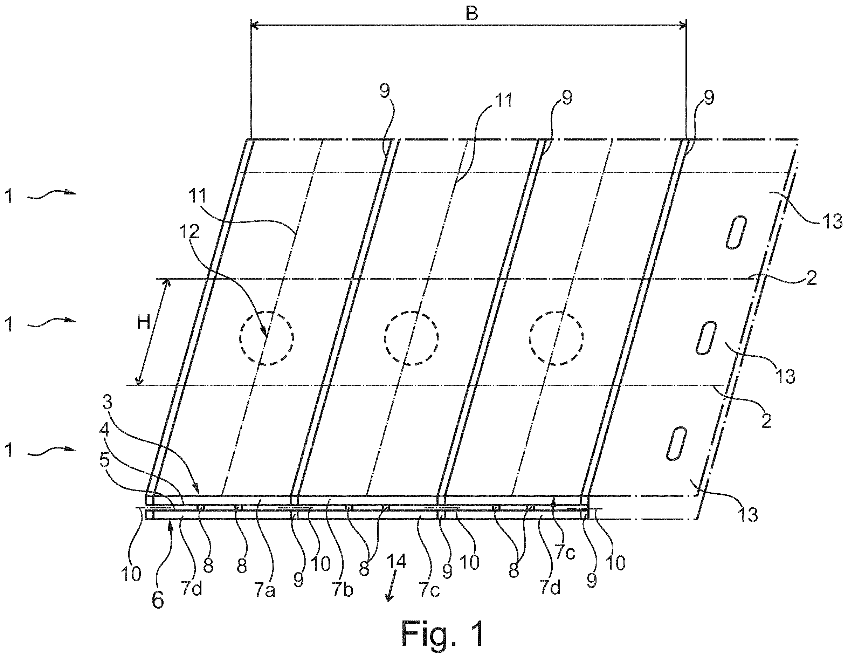

Figur 1 zeigt mehrere Verpackungen 1 für Verpackungsgüter, insbesondere für Behälter. Die Verpackungen 1 sind gemäß Figur 1 trennbar voneinander aneinandergereiht und mittels einer Rapportperforation 2 jeweils voneinander abgegrenzt. An der jeweiligen Rapportperforation 2 sind die Verpackungen 1 voneinander abtrennbar. Die hergestellten Verpackungen 1 sind somit als eine Art zusammenhängende, beliebig lange Reihe von mehreren Verpackungen 1 in Form einer Verpackungsreihe ausgebildet.

Nachfolgend wird einer der drei in Figur 1 dargestellten Verpackungen 1 beschrieben.

Eine einzige Verpackung 1 besteht gemäß Figur 1 aus vier aufeinanderliegenden Lagen 3, 4, 5, 6 aus Kunststofffolie. Zumindest für die beiden äußeren Lagen 3, 6 wird eine bidirektional schrumpfbare Kunststofffolie verwendet.

Die einzelne Verpackung 1 weist im Ausführungsbeispiel eine Höhe H von etwa 152 mm und eine Breite B von etwa 327 mm auf. Andere Abmessungen sind alternativ möglich, wobei diese im Ausführungsbeispiel nicht bei der jeweiligen Verpackung 1 vorliegen.

Gemäß Figur 1 weist jede Verpackung 1 ferner sechs Fächer 7a, 7b, 7c, 7d, 7e, 7f auf. Die Fächer 7a, 7b, 7c, 7d, 7e, 7f sind dabei so in der Verpackung 1 angeordnet, dass sich eine 2 x 3 Anordnung der Fächer 7a, 7b, 7c, 7d, 7e, 7f ergibt. Die Verpackung 1 ist somit als zweireihige Verpackung 1 ausgebildet, die in Zweierreihe jeweils drei Fächer 7a, 7b, 7c, 7d, 7e, 7f aufweist (2x3-Six-Pack). Es lassen sich folglich sechs Verpackungsgüter in der Verpackung 1 verpacken.

Die Fächer 7a, 7b, 7c der einen Seite der zweireihigen Verpackung 1 werden durch die äußere Lage 3 und die innere Lage 4 der Verpackung 1 gebildet. Die anderen drei Fächer 7d, 7e, 7f der jeweiligen Verpackung 1 werden durch die äußere Lage 6 und die innere Lage 5 der Verpackung 1 gebildet.

Für das Bilden der jeweiligen Fächer 7a, 7b, 7c, 7d, 7e, 7f sind gemäß Figur 1 die beiden inneren Lagen 4, 5 im Bereich der jeweiligen Fächer 7a, 7b, 7c, 7d, 7e, 7f jeweils mit zwei Längsschweißnähten 8 verschweißt. Die in Figur 1 dargestellte einzelne Verpackung 1 weist folglich sechs Längsschweißnähte 8 zwischen innerer Lage 4 und innerer Lage 5 auf, wobei jeweils zwei Längsschweißnähte 8 im Bereich der zugehörigen Fächer 7a, 7b, 7c, 7d, 7e, 7f geschweißt sind.

Die eine äußere Lage 3 ist gemäß Figur 1 mit der inneren Lage 4 mit Hilfe von vier Längsschweißnähten 9 verschweißt. Die andere äußere Lage 6 ist mit der inneren Lage 5 ebenso mit Hilfe von vier Längsschweißnähten 9 verschweißt. Die Längsschweißnähte 9 begrenzen dabei jeweils ein Fach 7a, 7b, 7c, 7d, 7e, 7f einer Verpackung 1.

Damit beim Schweißen der äußeren Längsschweißnähte 9 während der Herstellung der Verpackung 1 die beiden inneren Lagen 4, 5 nicht mit verschweißt werden, sind beispielhaft in Figur 1 im Bereich der zu schweißenden äußeren Längsschweißnähte 9 zwischen den beiden inneren Lagen 4, 5 mehrere Mittel dargestellt, die ein Verschweißen der inneren Lagen 4, 5 verhindern. In Figur 1 sind die Mittel jeweils eine Isolierfahne 10 aus Teflon, wobei gemäß Figur 1 vier Isolierfahnen 10 zur Verhinderung des Verschweißens verwendet werden. Die Isolierfahnen 10 sind somit ein mechanischen Mittel zum Verhindern der Verschweißung.

Die in Figur 1 beispielhaft dargestellten drei Verpackungen 1 weisen jeweils im Bereich der Fächer 7a, 7b, 7c, 7d, 7e, 7f jeweils eine durch die beiden äußeren Lagen 3, 6 hindurchgehende Trennperforation 11 auf. Die Trennperforationen 11 sind im Ausführungsbeispiel eingestanzt und Verlaufen parallel zur Längsschweißnaht 8 der inneren Lagen 4, 5. Mittels der jeweiligen Trennperforation 11 ist es möglich, einen nicht in Figur 1 dargestellten Behälter aus einem der sechs Fächer 7a, 7b, 7c, 7d, 7e, 7f der Verpackung 1 zu entnehmen. Der Behälter wurde dazu in eines der sechs Fächer 7a, 7b, 7c, 7d, 7e, 7f fest, beispielsweise mittels vorhergehender Hitzeeinwirkung für das Schrumpfen der zumindest zugehörigen äußeren Lage 3, 6, eingebracht. Während der Entnahme reißt ein Teil der jeweils zum Fach 7a, 7b, 7c, 7d, 7e, 7f zugehörigen äußeren Lage 3, 6 an der Trennperforation 11 ein, so dass der Behälter leicht aus der Verpackung 1 entnommen werden kann.

Alternativ oder ergänzend zu den Trennperforationen 11 gemäß Figur 1 ist es möglich, dass in zumindest die beiden äußeren Lagen 3, 6 der jeweiligen Verpackung 1 gemäß Figur 1 zumindest ein Etikett 12 jeweils im Bereich der Fächer 7a, 7b, 7c, 7d, 7e, 7f eingebracht ist. Beispielhaft ist in Figur 1 bei der mittleren Verpackung 1 im Bereich der drei Fächer 7a, 7b, 7c jeweils ein Etikett 12 gestrichelt angedeutet. Es ist somit jeweils ein Teil der äußeren Lage 3 beispielhaft als Etikett 12 für das Verpackungsgut gestaltet. Gemäß Figur 1 ist am Rand eines Etikettes 12 eine Perforation oder ein Vorschnitt zum Herausnehmen des Etikettes 12 eingebracht, wobei die Perforation oder der Vorschnitt an die jeweilige Trennperforation 11 direkt angrenzt. Ferner weist das Etikett 12 jeweils auf der Seite der jeweiligen Lage 3, die in Richtung des jeweiligen Verpackungsgutes weist (Verpackungsgut nicht in Figur 1 dargestellt), einen Reaktivklebstoff auf, so dass beim Herausnehmen des jeweiligen Verpackungsgutes aus der Verpackung 1 das zugehörige Etikett 12 auf dem Verpackungsgut verbleibt, nachdem das Etikett 12 aus der Verpackung 1 mit Hilfe der Perforation oder des Vorschnittes und der Trennperforation 11 zusammen mit der Verpackung 1 herausgerissen worden ist. Aus der WO 2011/116851 A1 sind derartige Etiketten und ein Verfahren zur Herstellung von Etiketten aufweisenden Verpackungen mittels Querschweißen bekannt.

Ergänzend ist es möglich, dass die Verpackung 1 jeweils eine Grifflasche 13 aufweist. Die Verpackungen 1 weisen gemäß Figur 1 jeweils keine Grifflasche 13 auf. Es ist jedoch beispielhaft für die jeweilige Verpackung 1 eine Grifflasche 13 angedeutet, die jeweils aus der äußeren Lage 3 und der äußeren Lage 6 gebildet wird. Es ist ferner bei der jeweiligen Grifflasche 13 ein Griffloch zum Tragen der jeweiligen Verpackung 1 gestrichelt dargestellt.

Mehrere der in Figur 1 dargestellten Verpackung werden beispielsweise auf einer Aufwickelrolle zu einer Verpackungsreihe aufgerollt. Die Aufwickelrolle ist in Figur 1 nicht dargestellt. Zum Aufwickeln auf einer Aufwickelrolle sowie zum vorhergehenden Erzeugen der vorhergehend beschriebenen Längsschweißnähte 8, 9 werden die Lagen 3, 4, 5, 6 in Produktionsrichtung 14 im Ausführungsbeispiel kontinuierlich bewegt und verschweißt.

Nachfolgend werden zwei unterschiedliche Vorrichtungen 15a, 15b zum Herstellen der in Figur 1 dargestellten Verpackungen 1 aus Kunststofffolie für Verpackungsgüter, insbesondere für Behälter, dargestellt.

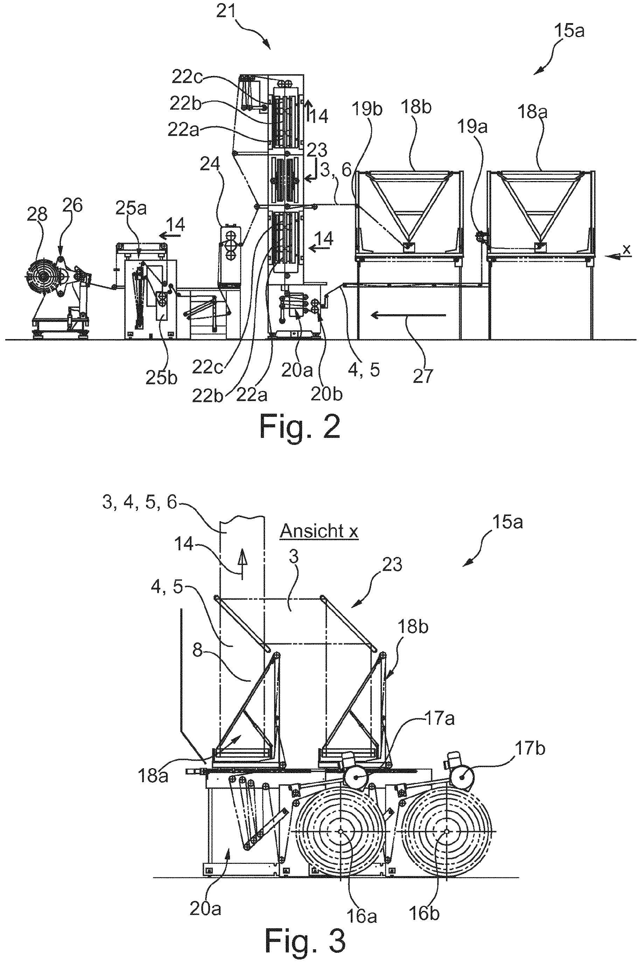

In den Figuren 2 und 3 ist eine besonders bevorzugte Vorrichtung 15a dargestellt, bei der die beiden inneren Lagen 4, 5 mittels einer Folienlage, die von einer Abwickelrolle 16a abgewickelt wird, gebildet werden und die beiden äußeren Lagen 3, 6 von einer anderen Folienlage, die von einer Abwickelrolle 16b abgewickelt wird, gebildet werden.

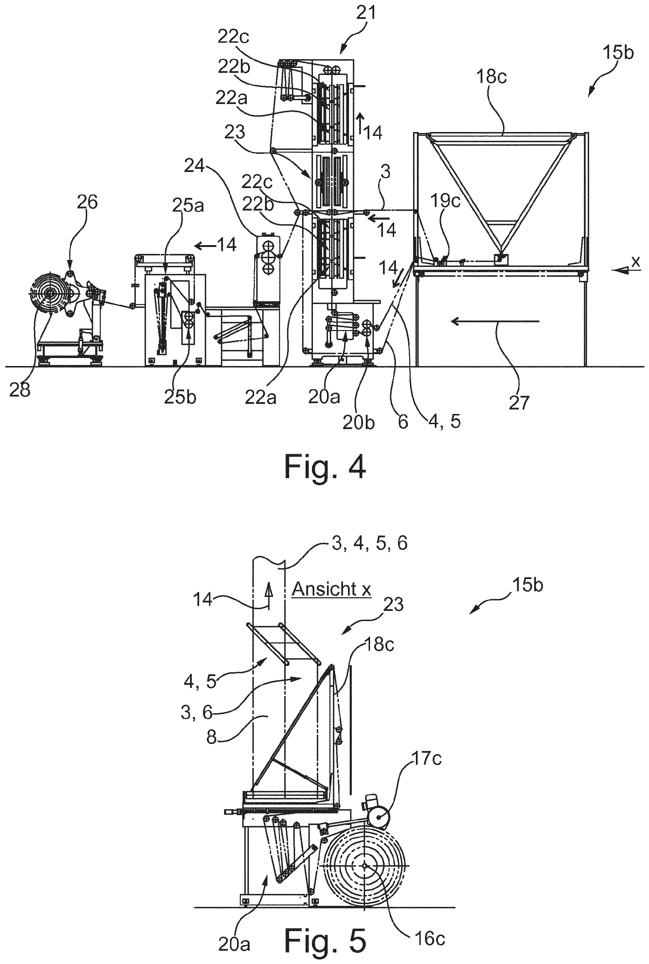

Im Gegensatz dazu weist die alternative bevorzugte Vorrichtung 15b gemäß den Figuren 4 und 5 nur eine einzige Abwickelrolle 16c auf. Auf dieser Rolle 16c ist eine einzige Folienlage aufgerollt, aus der die vier Lagen 3, 4, 5, 6 der jeweiligen Verpackung 1 im Rahmen der Herstellung in der Vorrichtung 15b gebildet werden.

Zunächst wird die besonders bevorzugte Vorrichtung 15a gemäß den Figuren 2 und 3 beschrieben.

Gemäß den vorhergehenden Ausführungen weist die Vorrichtung 15a zwei Abwickelrollen 16a, 16b zur Zuführung der beiden separaten Folienlagen auf. Dabei weist die Vorrichtung 15a gemäß Figur 3 an jeder Abwickelrolle 16a, 16b jeweils einen Abwickler 17a, 17b auf. Des Weiteren weist die Vorrichtung 15a gemäß den Figuren 2 und 3 für jede Folienlage jeweils ein Faltdreieck 18a, 18b auf. Ferner weist die Vorrichtung 15a jeweils ein Mittel zur Erzeugung einer Trennperforation 19a, 19b im Bereich des jeweiligen Faltdreiecks 18a, 18b auf. In Zuführichtung 27 werden dabei die vier Lagen 3, 4, 5, 6 den weiteren Bauteilen der Vorrichtung 15a gemäß Figur 2 zugeführt. Die Zuführrichtung 27 ist parallel zum Boden, auf dem die Vorrichtung 15a steht.

Daneben weist die Vorrichtung 15a gemäß den Figuren 2 und 3 einen Schwinger 20a mit Vorzugswalzenpaar 20b auf.

Im Bereich des Schwingers 20a werden die Isolierfahnen 10 zwischen die beiden inneren Lagen 4, 5 eingebracht. Die Isolierfahnen 10 bestehen aus Teflon.

Ferner weist die Vorrichtung eine Einheit in Form eines Schweißturmes 21 zum Schweißen der Lagen 3, 4, 5, 6 auf. Der Schweißturm 21 weist im Ausführungsbeispiel gemäß Figuren 2 und 3 für jede zu schweißende Längsschweißnaht 8 drei Längsschweißbalkenpaare 22a, 22b, 22c auf, die in einer Reihe hintereinander in Produktionsrichtung 14 angeordnet sind. Ferner weist die Vorrichtung für die zu schweißenden Längsschweißnähte 9 jeweils auch drei Längsschweißbalkenpaare 22a, 22b, 22c auf, die auch in Reihe hintereinander in Produktionsrichtung 14 angeordnet sind. Die Längsschweißbalkenpaare 22a, 22b, 22c für die Längsschweißnähte 8 und die Längsschweißbalkenpaare 22a, 22b, 22c für die Längsschweißnähe 9 sind gemäß Figur 2 zueinander beabstandet. Die Länge eines dauerbeheizten Längsschweißbalkens eines Längsschweißbalkenpaares 21a, 21b, 21c ist im Ausführungsbeispiel gemäß den Figuren 2 und 3 etwa 250 mm.

Die ersten Längsschweißbalkenpaare 22a, 22b, 22c weisen jeweils auf einer der beiden Seiten, auf der sich die jeweilige Schweißbalkenkante der zugehörigen Längsschweißbalken befindet, ein mit der gleichen Bewegungsgeschwindigkeit wie die der Lagen 4, 5 endlos umlaufendes Teflonband auf, das separat angetrieben ist. Das Teflonband läuft somit zwischen jeweiligen Schweißbalkenkanten und zugehöriger benachbarter innerer Lage 4, 5.

Die zweiten Längsschweißbalkenpaare 22a, 22b, 22c weisen auch jeweils auf einer der beiden Seiten, auf der sich die jeweilige Schweißbalkenkante der zugehörigen Längsschweißbalken befindet, ein mit der gleichen Bewegungsgeschwindigkeit wie die der Lagen 3, 4, 5, 6 endlos umlaufendes Teflonband auf, das separat angetrieben ist. Das Teflonband läuft somit zwischen jeweiligen Schweißbalkenkanten und zugehöriger benachbarter äußerer Lage 3, 6.

Der Schweißturm 21 ist gemäß den Figuren 2 und 3 senkrecht zum Boden, auf dem die Vorrichtung 15a steht, in vertikaler Richtung angeordnet. Gemäß den Figuren 2 und 3 sind die Lagen 3, 4, 5, 6, die durch die Vorrichtung 15a zur Herstellung der jeweiligen Verpackung 1 geführt werden, somit im Schweißturm 21 senkrecht zum Boden geführt, so dass eine Verschweißung am jeweiligen Längsschweißbalkenpaar 22a, 22b, 22c bei einer Bewegungsrichtung in Produktionsrichtung 14 mit zunehmender Höhe durchgeführt wird. Dabei werden die beiden inneren Lagen 4, 5 zunächst senkrecht geführt und anschließend, nach Zuführung der beiden äußeren Lagen 3, 6, alle Lagen 3, 4, 5, 6 senkrecht gemäß Figuren 2 und 3 in Produktionsrichtung 14 geführt. Gemäß Figuren 2 und 3 sind folglich die jeweiligen Längsschweißbalkenpaare 22a, 22b, 22c senkrecht zur Zuführrichtung 27 der zu verschweißenden inneren Lagen 4, 5 in der Vorrichtung 15a angeordnet.

Alternativ ist auch eine Bewegung mit zunehmender Tiefe senkrecht zum Boden in dem Schweißturm 21 der Vorrichtung 15a möglich, so dass sich die Richtung beim Verschweißen um 180° gedreht hat. Dieses ist jedoch im Ausführungsbeispiel nicht der Fall.

Ferner weist die Vorrichtung 15a geeignete Umlenkrollen und dergleichen auf, um die jeweiligen Lagen 3, 4, 5, 6 vom Bereich des jeweiligen Faltdreiecks 18a, 18b dem Schweißturm 21 gemäß Figuren 2 und 3 passend zuzuführen.

Des Weiteren weist die Vorrichtung 15a mehrere Wendestangen 23 auf.

Zwischen Faltdreieck 18a und Schweißturm 21 sind jeweils die beiden äußeren Lagen 3, 6 und die beiden inneren Lagen 4, 5 gemäß Figur 2 dargestellt. In Figur 3 sind die beiden inneren Lagen 4, 5 und eine äußere Lage 3 beispielhaft dargestellt, wobei die äußere Lage 3 über Wendestangen 23 zugeführt wird. Die weitere äußere Lage 6 ist unterhalb der äußeren Lage 3 gemäß Figur 3 verlaufend und wird auch über Wendestangen 23 den beiden inneren Lagen 4, 5 zugeführt.

Ferner weist die Vorrichtung 15a gemäß den Figuren 2 und 3 ein Mittel zur Erzeugung einer Rapportperforation 24 auf.

Des Weiteren weist die Vorrichtung 15a einen Tänzer 25a mit Vorzugswalzenpaar 25b auf.

Daneben weist die Vorrichtung 15a gemäß den Figuren 2 und 3 einen Aufwickler 26 auf. Der Aufwickler 26 ist eine automatische Wickelstation, wobei hergestellte, aneinanderhängende Verpackungen 1 auf eine der beiden Aufwickelrollen 28 des Aufwickelers 26 aufgewickelt werden.

Die weiteren dem Fachmann geläufigen Maschinenteile der Vorrichtung 15a, die in den Figuren 2 und 3 dargestellt sind, sind nicht im Detail aufgezählt.

Nachfolgend werden ausschließlich die Unterschiede der in Figuren 4 und 5 dargestellten Vorrichtung 15b gegenüber der in den Figuren 2 und 3 dargestellten Vorrichtung 15a dargestellt. In den anderen Merkmalen und Bauteilen unterscheidet sich die Vorrichtung 15b nicht von der Vorrichtung 15a.

Die in den Figuren 4 und 5 dargestellte Vorrichtung 15b weist ausschließlich eine einzige Abwickelrolle 16c auf, auf der eine einzige Folienlage aufgewickelt ist. Ferner weist die Vorrichtung 15b gemäß Figur 5 nur einen einzigen Abwickler 17c auf. Daneben weist die in Figuren 4 und dargestellte Vorrichtung 15b nur ein einziges Faltdreieck 18c auf. Ferner weist die Vorrichtung 15b gemäß den Figuren 4 und 5 nur ein einziges Mittel zur Erzeugung einer Trennperforation 19c auf.

In den Figuren 4 und 5 sind jeweils zwischen Faltdreieck 18c und Schweißturm 21 die beiden inneren Lagen 4, 5 und die beiden äußeren Lagen 3, 6 dargestellt. Dabei weist die Vorrichtung 15b ferner geeignete Umlenkrollen, Wendestangen 23 und dergleichen auf, um die jeweiligen Lagen 3, 4, 5, 6 vom Bereich des Faltdreiecks 18c dem Schweißturm 21 gemäß Figuren 4 und 5 passend zuzuführen.

Die Weiteren in den Figuren 4 und 5 dargestellten Bauteile der Vorrichtung 15b wie beispielsweise der Schweißturm 21 und die anderen in Figuren 4 und 5 dargestellten Bauteile der Vorrichtung 15b entsprechen jeweils der vorhergehend zu der Vorrichtung 15a in den Figuren 2 und 3 beschriebenen Ausführung.

Nachfolgend wird ein Verfahren zum Herstellen von den in Figur 1 dargestellten Verpackungen 1 aus Kunststofffolie für Verpackungsgüter, insbesondere für Behälter, beschrieben.

Zunächst wird das durchgeführte Herstellungsverfahren in der besonders bevorzugten Vorrichtung 15a gemäß den Figuren 2 und 3 beschrieben. Dieses Herstellungsverfahren ist besonders bevorzugt.

Dazu wird zunächst von jeweils einer Abwickelrolle 16a, 16b eine Folienlage mit Hilfe des zugehörigen Abwicklers 17a, 17b abgewickelt. Zumindest für die Folienlage, die auf der Abwickelrolle 16b aufgewickelt ist, wird eine bidirektionale schrumpfbare Kunststofffolie gemäß vorhergehenden Ausführungen verwendet. Im Ausführungsbeispiel sind die Folienlagen, die von der jeweiligen Abwickelrolle 16a, 16b abgerollt werden, schon bedruckt. Dabei sind die beiden inneren Lagen 4, 5 als sogenannte Streudruckfolien bedruckt und die beiden äußeren Lagen präzise mit einem Logo oder dergleichen bedruckt.

Anschließend wird die jeweilige Folienlage dem jeweiligen Faltdreieck 18a, 18b zugeführt. So wird die Folienlage, die von der Abwickelrolle 16a abgewickelt wird, dem Faltdreieck 18a zugeführt und die Folienlage, die von der Abwickelrolle 16b abgewickelt wird, dem Faltdreieck 18b zugeführt.

In dem jeweiligen Faltdreieck 18a, 18b wird die jeweilige Folienlage im Ausführungsbeispiel gemäß den Figuren 2 und 3 zunächst umgefaltet. Es bildet sich somit jeweils zwei aufeinander liegende Lagen, die miteinander an der zugehörigen Faltkante noch verbunden sind.

Anschließend werden die beiden jeweils umgefalteten Folienlagen getrennt. Die beiden inneren Lagen 4, 5 zur Herstellung der jeweiligen Verpackungen 1 gemäß Figur 1 werden somit aus der umgefalteten und getrennten Folienlage, die von der Abwickelrolle 16a abgerollt wird, hergestellt. Die beiden äußeren Lagen 3, 6 werden dabei folglich aus der anderen umgefalteten und getrennten Folienlage, die von der Abwickelrolle 16b abgerollt wird, hergestellt.

Anschließend werden mittels des Mittels zur Erzeugung einer Trennperforation 19b gemäß Figur 2 in die beiden äußeren Lagen 3, 6 jeweils eine Trennperforation 11 gemäß Figur 1 im Bereich der späteren Fächer 7a, 7b, 7c, 7d, 7e, 7f eingebracht. Das Einbringen ist beispielsweise mechanisch mittels einer Messerwalze und einer Schneidwalze nach bekannter Art möglich. Ergänzend ist es möglich, dass in die beiden inneren Lagen 4, 5 Trennperforationen 11 mittels des Mittels zur Erzeugung einer Trennperforation 19a eingebracht werden. Dies ist im Ausführungsbeispiel gemäß den Figuren 1 bis 3 jedoch nicht der Fall.

Im Ausführungsbeispiel werden die Trennperforationen 11 während des Herstellungsverfahrens in die äußeren Lagen 3, 6 kontinuierlich eingestanzt. Dabei sind die Trennperforationen 11 parallel zur noch zu schweißenden Längsschweißnaht 8 der inneren Lagen 4, 5 in die jeweiligen Lagen 3, 6 gemäß vorhergehender Beschreibung eingestanzt. Die Längsschweißnähte 8 sind beim Einbringen der Trennperforationen 11 noch nicht geschweißt.

Anschließend werden die inneren Lagen 4, 5 in Zuführrichtung 27 dem Schwinger 20a mit Hilfe des Vorzugswalzenpaares 20b zugeführt. Die beiden inneren Lagen 4, 5 werden somit dem Schweißturm 21 zugeführt. Ferner werden die beiden äußeren Lagen 3, 6 dem Schweißturm 21 gemäß Figur 2 zugeführt.

Die beiden übereinander liegenden inneren Lagen 4, 5 werden anschließend mit sechs Längsschweißnähten 8 gemäß Figur 1 kontinuierlich in dem Schweißturm 21 in Produktionsrichtung 14 verschweißt, indem die Lagen 4, 5 kontinuierlich durch die ersten Längsschweißbalkenpaare 22a, 22b, 22c hindurchgeführt wird. Für jede zu schweißende Längsschweißnaht 8 werden drei Längsschweißbalkenpaare 22a, 22b, 22c in Reihenanordnung eingesetzt, so dass insgesamt bei sechs zu schweißenden Längsschweißnähten 8 sechs mal drei Längsschweißbalkenpaare 22a, 22b, 22c in der Vorrichtung 15a eingesetzt werden. Die zu verschweißenden inneren Lagen 4, 5 werden dabei in einer Bewegungsrichtung senkrecht zur Zuführrichtung 27 der zu verschweißenden inneren Lagen 4, 5, das heißt senkrecht zum Boden, mittels der ersten Längsschweißbalkenpaare 22a, 22b, 22c des Schweißturms 21 verschweißt. In Figur 3 sind auch beispielhaft sechs Längsschweißnähte 8, die in der Vorrichtung 15a mit Hilfe der ersten Längsschweißbalkenpaare 22a, 22b, 22c geschweißt worden sind, beispielhaft dargestellt.

Vor dem Verschweißen der beiden inneren Lagen 4, 5 wurde in die beiden inneren Lagen 4, 5 zumindest ein Mittel eingebracht, um ein Verschweißen der beiden inneren Lagen 4, 5 beim Verschweißen mit zugehörigen äußeren Lagen 3, 6 zu verhindern. Als Mittel werden gemäß vorhergehenden Ausführungen mehrere Isolierfahnen 10 in Form eines mechanischen Trennmittels verwendet, die vor dem Verschweißen der beiden inneren Lagen 4, 5 zwischen die beiden inneren Lagen 4, 5 jeweils passend eingebracht werden. Die inneren Lagen 4, 5 umhüllen somit die Isolierfahnen 10, wobei die inneren Lagen 4, 5 kontinuierlich über die Isolierfahnen 10 hinweggleiten.

Anschließend werden die beiden äußeren Lagen 3, 6 mit der gleichen Bewegungsgeschwindigkeit, die auch die beiden inneren Lagen 4, 5 aufweisen, jeweils mit Hilfe der Wendestangen 23 gemäß Figuren 2 und 3 auf die zugehörige innere Lage 4, 5 aufgelegt. Es wird somit die eine äußere Lage 3 auf die mit der der Lage 5 verschweißten Lage 4 aufgelegt. Die andere äußere Lage 6 wird auf die andere Seite der schon verschweißten Lagen 4, 5 aufgelegt, wobei die Lage 6 im Detail auf die Lage 5 aufgelegt wird. Im Ausführungsbeispiel werden die beiden äußeren Lagen 3, 6 dabei so aufgelegt, dass vor dem Befestigen von äußerer Lage 3, 6 mit zugehöriger innerer Lage 4, 5 beide äußere Lagen 3, 6 aufgelegt sind. Ein Auflegen ist beispielsweise mittels einer nicht dargestellten Rapporteinheit rapportgenau möglich, so dass beispielsweise jeweils ein Logo oder dergleichen im Bereich der später erzeugten Fächer 7a, 7b, 7c, 7d, 7e, 7f angeordnet ist.

Anschließend werden die vier Lagen 3, 4, 5, 6 miteinander gemäß Figur 1 kontinuierlich verschweißt. Dazu werden die vier Lagen 3, 4, 5, 6 gemäß Figur 3 den zweiten Längsschweißbalkenpaaren 22a, 22b, 22c in Produktionsrichtung 14 kontinuierlich zugeführt. In dem oberen Bereich des Schweißturms 21 weist die Vorrichtung 15a folglich dazu vier mal drei Längsschweißbalkenpaare 22a, 22b, 22c auf, wobei jede Längsschweißnaht 9 mittels der zugehörigen zweiten drei Längsschweißbalkenpaare 22a, 22b, 22c verschweißt wird.

Auf der einen Seite der jeweils herzustellenden Verpackung 1 wird somit die eine äußere Lage 3 kontinuierlich in dem Schweißturm 21 mit vier Längsschweißnähten 9 mit den schon verschweißten inneren Lagen 4, 5 gemäß Figur 1 in Produktionsrichtung 14 verschweißt.

Während des Schweißprozesses wird die äußere Lage 3 kontinuierlich an der schon mit der inneren Lage 5 verschweißten inneren Lage 4 während des Durchlaufs durch den Schweißturm 21 befestigt.

Auf der anderen Seite der jeweils herzustellenden Verpackung 1 gemäß Figur 1 wird auch die weitere äußere Lage 6 mit der zweiten inneren Lage 5 auch mit Hilfe der zugehörigen zweiten Längsschweißbalkenpaare 22a, 22b, 22c verschweißt. Folglich wird auch die zweite weitere äußere Lage 6 kontinuierlich mit der schon mit der inneren Lage 4 verschweißten inneren Lage 5 während des Durchlaufens durch den Schweißturm 21 befestigt.

Während des kontinuierlichen Verschweißens der vier Lagen 3, 4, 5, 6 in Produktionsrichtung 14 werden die beiden schon vorher verschweißten inneren Lagen 4, 5 mit Hilfe der jeweiligen Isolierfahne 10 voneinander getrennt werden, um ein verschweißen der beiden inneren Lagen 4, 5 zu verhindern.

Alternativ ist es auch möglich, dass die jeweiligen Lagen 3, 4, 5, 6 gemäß vorhergehender Beschreibung ausschließlich getaktet oder teilweise getaktet und teilweise kontinuierlich in dem Schweißturm 21 verschweißt werden. Dieses ist im Ausführungsbeispiel jedoch nicht der Fall.

Ein nachfolgendes Kühlen der verschweißten Lagen 3, 4, 5, 6, insbesondere der zugehörigen verschweißten Längsschweißnähte 8, 9, ist ergänzend in der Vorrichtung 15a möglich.

Anschließend werden die vier miteinander verschweißten Lagen 3, 4, 5, 6 einem Mittel zur Erzeugung einer Rapportperforation 24 gemäß Figur 2 zugeführt. Mittels des Mittels zur Erzeugung einer Rapportperforation 24 wird im Ausführungsbeispiel in die vier verschweißten Lagen 3, 4, 5, 6 gemäß Figur 1 senkrecht zur Längsschweißnaht 8 der inneren Lagen 4, 5 zumindest eine Rapportperforation 2 eingebracht. Im Ausführungsbeispiel werden kontinuierlich nacheinander Rapportperforationen 2 durch alle vier Lagen 3, 4, 5, 6 hindurch in die vier Lagen 3, 4, 5, 6 eingestanzt, wobei zwei benachbarte Rapportperforationen 2 mit einem Abstand einer Höhe H in alle vier Lagen 3, 4, 5, 6 eingebracht werden. Die Höhe H der Fächer 7a, 7b, 7c, 7d, 7e, 7f entspricht dabei dieser Rapportlänge.

Anschließend werden die vier Lagen 3, 4, 5, 6 einem Tänzer 25a mit Hilfe des Vorzugswalzenpaares 25b zugeführt. Die Aufgabe des Tänzers 25a ist zum einen eine Korrekturfunktion. Zum anderen hat der Tänzer 25a die Aufgabe einer Kompensationsfunktion.

Die Korrekturfunktion ergibt sich dadurch, dass beim Aufwickeln der vier Lagen 3, 4, 5, 6 auf dem Aufwickler 26 sich der Geschwindigkeit aufgrund des sich verändernden Durchmessers der Aufwickelrolle 28 verändert. Dieses korrigiert der Tänzer 25a.

Zum anderen weist der Aufwickler 26 zwei Arme für jeweils eine Aufwickelrolle 28 auf, so dass ein kontinuierliches Aufwickeln auf jeweils einer der beiden Aufwickelrollen 28 möglich ist. Beim Wechseln des einen Armes des Aufwicklers 26 zu dem anderen Arm des Aufwicklers 26 kompensiert der Tänzer 25a diesen zeitlich dauernden Wendevorgang. Ein Wechsel ist beispielsweise notwendig, wenn der maximal aufzuwickelnde Durchmesser der Aufwickelrolle 28 erreicht ist.

Die auf Aufwickelrollen 28 aufgewickelten Verpackungen 1 lassen sich anschließend beispielsweise in einer anderen Vorrichtung, die nicht in den Figuren 2 und 3 dargestellt ist, mit Verpackungsgut, beispielsweise Behältern in Form von Flaschen oder dergleichen, befüllen. Nach einem dem Befüllen nachfolgenden Schrumpfvorgang sitzen die jeweiligen Flaschen fest in dem jeweiligen Fach 7a, 7b, 7c, 7d, 7e, 7f, wobei in der Regel eine Flasche in ein Fach 7a, 7b, 7c, 7d, 7e, 7f eingefüllt worden ist.

Alternativ ist es auch bei der Herstellung der Verpackungen 1 in der Vorrichtung 15a gemäß Figur 1 möglich, in der Vorrichtung 15a gemäß den Figuren 2 und 3 die jeweilige Lage 2, 3, 4, 5 zu bedrucken anstatt vorbedruckte Folienlagen zu verwenden. Dabei ist es alternativ auch möglich, in der Vorrichtung 15a eine Coronavorbehandlung vor dem Bedrucken in der Vorrichtung 15a durchzuführen. Für eine Coronavorbehandlung weist die Vorrichtung 15a gemäß den Figuren 2 und 3 bevorzugt passende Aussparungen auf, mit denen eine Vorbehandlung kontinuierlich bezogen auf das Ausführungsbeispiel bei der jeweiligen Folienlage bereichsgenau möglich ist. Eine Coronavorbehandlung und ein Bedrucken wird jedoch im Ausführungsbeispiel gemäß den Figuren 2 und 3 innerhalb der Vorrichtung 15a nicht durchgeführt.

Alternativ ist es auch möglich als Mittel einen Trennlack zu verwenden. Bevorzugt ist die Innenseite der einen inneren Lage 4 und/oder die Innenseite der zweiten inneren Lage 5 mit Trennlack vor dem Verschweißen von den beiden inneren Lagen 4, 5 beschichtet worden. Mittels des Trennlacks werden die beiden schon vorher verschweißten inneren Lagen 4, 5 dann beim Verschweißen mit den beiden äußeren Lagen 3, 6 in den Bereichen, in denen der Trennlack aufgebracht worden ist, voneinander getrennt. Es wird folglich ein Verschweißen der beiden inneren Lagen 4, 5 mit Hilfe des Trennlacks verhindert, wenn die jeweilige äußere Lage 3, 6 mit zumindest einer Längsschweißnaht 9 mit den beiden schon verschweißten inneren Lagen 4, 5 gemäß vorhergehenden Ausführungen verschweißt wird. Trennlack wird im Ausführungsbeispiel jedoch nicht verwendet.

Ergänzend ist es zum einen auch möglich, dass während der Herstellung der Verpackungen 1 gemäß der Figur 1 in der Vorrichtung 15a gemäß den Figuren 2 und 3 an die jeweilige Verpackung 1 zumindest eine Grifflasche 13 angebracht wird. Zum anderen ist es ergänzend auch möglich, dass zumindest eine Grifflasche 13 in die jeweiligen Lagen 3, 4, 5, 6, vorzugsweise in die beiden äußeren Lagen 3, 6, eingebracht wird, insbesondere eingestanzt wird. Gemäß vorhergehenden Ausführungen ist dieses im Ausführungsbeispiel gemäß den Figuren 2 und 3 in der Vorrichtung 15a jedoch nicht der Fall und die Vorrichtung 15a weist auch kein passendes Mittel dafür auf.

Ergänzend ist es auch möglich, dass während der Herstellung der jeweiligen Verpackungen 1 gemäß Figur 1 in der Vorrichtung 15a gemäß den Figuren 2 und 3 jeweils ein Teil der äußeren Lage 3, 6 und/oder jeweils ein Teil der inneren Lage 4, 5 als Etikett 12 für das Verpackungsgut gestaltet ist oder wird, wobei beim Herausnehmen des Verpackungsguts aus der fertig hergestellten Verpackung 1 das Etikett 12 auf dem Verpackungsgut selbst verbleibt. Dabei werden bevorzugt die Etiketten 12 jeweils mittig im Bereich der Fächer 7a, 7b, 7c, 7d, 7e, 7f während der Herstellung in einer Vorrichtung 15a gemäß Figur 1 angeordnet. Die Form der Etiketten 12 wird dabei bevorzugt jeweils vor dem Längsschweißen der Längsschweißnähte 8, 9 eingebracht.

Bevorzugt wird am Rand eines Etiketts 12 eine Perforation oder ein Vorschnitt zum Herausnehmen des Etiketts 12 eingebracht und die Etiketten mit einem Reaktivklebstoff auf der Seite der jeweiligen Lage 3, 4, 5, 6, die in Richtung Verpackungsgut weist, in der Vorrichtung 15a versehen.

Es ist ergänzend möglich, dass die Form der Etiketten 12 mit Hilfe des Mittels zur Erzeugung einer Trennperforation 19a, 19b in die jeweilige Lage 3, 4, 5, 6 mit eingebracht wird. Dabei ist das Mittel zur Erzeugung einer Trennperforation 19a, 19b nicht auf ein gerades Profil oder dergleichen beschränkt, so dass auch beliebige Formen eines Etikettes 12, beispielsweise eine Kurvenform, Ellipsenform oder dergleichen, mittels des Mittels zur Erzeugung einer Trennperforation 19a, 19b einbringbar sind.

Gemäß vorhergehenden Ausführungen wird bei der Herstellung der Verpackungen 1 gemäß Figur 1 in der Vorrichtung 15a gemäß Figuren 2 und 3 keine Herstellung eines Etikettes 12 in die jeweilige Lage 3, 4, 5, 6 durchgeführt.

Nachfolgend wird die Herstellung der Verpackung 1 gemäß Figur 1 in einer Vorrichtung 15b gemäß den Figuren 4 und 5 beschrieben. Dabei werden insbesondere die Herstellungsschritte im Detail beschrieben, die sich von den vorhergehend beschriebenen Herstellungsschritten in der Vorrichtung 15a unterscheiden.

Zum Herstellen der sechs Fächer 7a, 7b, 7c, 7d, 7e, 7f aufweisenden Verpackung 1 aus Kunststofffolie für Verpackungsgüter, insbesondere für Behälter, wird eine einzige Folienlage von einer Abwickelrolle 16c mit Hilfe eines Abwicklers 17c gemäß Figur 5 abgewickelt. Für die Folienlage wird im Ausführungsbeispiel eine bidirektionale Kunststofffolie verwendet.

Die Folienlage, die in der Vorrichtung 15b verwendet wird, ist im Ausführungsbeispiel bedruckt. Nach dem nachfolgend beschriebenen Umfalten und Trennen der Folienlage in vier Lagen 3, 4, 5, 6 liegen diese weiterhin rapportgenau vor, da aus einer einzigen Folienlage umgefaltet und getrennt worden ist. Dadurch ist ein rapportunabhängiges Zuführen der einzelnen Lagen 3, 4, 5, 6 zum Schweißturm 21 gemäß nachfolgender Beschreibung möglich.

Alternativ ist es möglich, die Folienlage oder die einzelnen Lagen 3, 4, 5, 6 in der Vorrichtung 15b selbst zu bedrucken. Ferner ist es dabei ergänzend möglich, eine Coronavorbehandlung in der Vorrichtung 15b auch mit durchzuführen. Dieses ist im Ausführungsbeispiel jedoch nicht der Fall.

Nach dem Abrollen wird die Folienlage einem Faltdreieck 18c der Vorrichtung 15b gemäß Figur 4 und Figur 5 zugeführt. In dem Faltdreieck 18c wird die Folienlage umgefaltet und anschließend so getrennt, dass sich gemäß Figuren 4 und 5 vier einzelne Lagen 3, 4, 5, 6 aus der einzigen Folienlage ausbilden.

Die inneren Lagen 4, 5 und die äußeren Lagen 3, 6 werden somit aus der einzigen umgefalteten und getrennten Folienlage hergestellt.

Mit Hilfe des Mittels zur Erzeugung einer Trennperforation 19c werden in die beiden äußeren Lagen 3, 6 parallel zur im Schweißturm 21 noch zu schweißenden Längsschweißnaht 8 der inneren Lagen 4, 5 mehrere Trennperforationen 11 eingebracht. Die Trennperforationen 11 befinden sich dabei im Bereich der späteren Fächer 7a, 7b, 7c, 7d, 7e, 7f gemäß Figur 1, wobei die Trennperforationen 11 im Ausführungsbeispiel eingestanzt werden. Während des Einbringens der Trennperforation 11 sind somit die beiden inneren Lagen 4, 5 noch nicht längsgeschweißt.

Die vier Lagen 3, 4, 5, 6 werden anschließend in Zuführrichtung 27 dem Schweißturm 21 zugeführt. Die Zuführrichtung 27 ist parallel zum Boden, auf dem die Vorrichtung 15b aufgestellt ist. Die beiden inneren Lagen 4, 5 werden dabei aufeinanderliegend dem Schweißturm 21 zugeführt. Die beiden äußeren Lagen 3, 6 werden separat und nicht aufeinanderliegend dem Schweißturm 21 gemäß Figuren 4 und 5 zugeführt.

Die beiden inneren Lagen 4, 5 werden anschließend gemäß Figur 4 und Figur 5 dem Schwinger 20a mittels des Vorzugswalzenpaares 20b zugeführt. Vor dem Verschweißen der beiden inneren Lagen 4, 5 werden vier Isolierfahnen 10 zwischen die beiden inneren Lagen 4, 5 im Bereich des Schweißturms 21 eingebracht.

Alternativ ist es auch möglich, dass die Innenseite der einen inneren Lage 4 und/oder die Innenseite der zweiten inneren Lage 5 mit Trennlack beschichtet sind oder werden. Dies ist im Ausführungsbeispiel jedoch nicht der Fall.

Anschließend werden die mehrere Isolierfahnen 10 umhüllenden inneren Lagen 4, 5 den ersten Längsschweißbalkenpaaren 22a, 22b, 22c in dem Schweißturm 21 zugeführt. Mittels der ersten Längsschweißbalkenpaare 22a, 22b, 22c werden im Ausführungsbeispiel die beiden inneren Lagen 4, 5 mittels sechs Längsschweißnähten 8 kontinuierlich verschweißt, da die Lagen 4, 5 kontinuierlich durch den senkrecht zum Boden angeordneten Schweißturm 21 geführt werden. Die beiden zu verschweißenden inneren Lagen 4, 5 werden somit in einer Bewegungsrichtung in Produktionsrichtung 14 senkrecht zur Zuführrichtung 27 der zu verschweißenden inneren Lagen 4, 5 mittels der ersten Längsschweißbalkenpaare 22a, 22b, 22c kontinuierlich verschweißt. Die sechs Längsschweißnähte 8 sind neben der Figur 1 auch in Figur 5 beispielhaft dargestellt.

Die beiden äußeren Lagen 3, 6 werden im Ausführungsbeispiel jeweils gemäß Figur 4 mit Hilfe von Wendestangen 23 den beiden schon verschweißten inneren Lagen 4, 5 kontinuierlich zugeführt. Die beiden äußeren Lagen 3, 6 werden anschließend so aufgelegt, dass vor dem Befestigen der äußeren Lage 3, 6 mit zugehöriger innerer Lage 4, 5 beide äußere Lagen 3, 6 aufgelegt sind.

Dabei wird die eine äußere Lage 3 gemäß Figuren 4 und 5 mit gleicher Bewegungsgeschwindigkeit wie die Bewegungsgeschwindigkeit der inneren Lagen 4, 5 auf die innere Lage 4 aufgelegt. Ebenso wird die äußere Lage mit der gleichen Bewegungsgeschwindigkeit wie die Bewegungsgeschwindigkeit der beiden inneren Lagen 4, 5 auf die innere Lage 5 aufgelegt.

Anschließend werden die vier aufeinanderliegenden Lagen 3, 4, 5, 6 den zweiten Längsschweißbalkenpaaren 22a, 22b, 22c zugeführt.

Mittels dieser zweiten Längsschweißbalkenpaare 22a, 22b, 22c wird die eine äußere Lage 3 mit der benachbarten inneren Lage 4 mit vier Längsschweißnähten 9 kontinuierlich verschweißt, wobei die beiden schon vorher verschweißten inneren Lagen 4, 5 mit Hilfe der Isolierfahnen 10 voneinander getrennt werden, um ein Verschweißen der beiden inneren Lagen 4, 5 zu verhindern.

Die andere äußere Lage 6 wird mit der benachbarten inneren Lage 5 auch mit Hilfe der zweiten Längsschweißbalkenpaare 22a, 22b, 22c mit vier Längsschweißnähten 9 kontinuierlich verschweißt, wobei auch die beiden vorher schon verschweißten inneren Lagen 4, 5 mit Hilfe der Isolierfahnen 10 voneinander getrennt werden, so dass dadurch auch ein Verschweißen der beiden inneren Lagen 4, 5 verhindert wird.

Alternativ ist es auch möglich, dass die jeweiligen Lagen 3, 4, 5, 6 gemäß vorhergehender Beschreibung ausschließlich getaktet oder teilweise getaktet und teilweise kontinuierlich verschweißt werden. Dieses ist im Ausführungsbeispiel jedoch nicht der Fall.

Die dem Schweißen im Schweißturm 21 nachfolgenden Schritte in der Vorrichtung 15b gemäß den Figuren 4 und 5 entsprechen den vorhergehend zu der Vorrichtung 15a aus den Figuren 2 und 3 im Detail dargestellten Herstellungsschritten.

Es werden somit auch mittels des Mittels zur Einbringung einer Rapportperforation 24 die Rapportperforationen 2 gemäß Figur 1 in die jeweilige Lagen 3, 4, 5, 6 eingebracht. Ferner werden mit Hilfe des Tänzers 25a und zugehörigem Vorzugswalzenpaar 25b die miteinander gemäß Figur 1 verschweißten Lagen 3, 4, 5, 6 zusammen mit Hilfe des Aufwicklers 26 auf jeweils eine Aufwickelrolle 28 gemäß vorhergehender Beschreibung aufgewickelt.

Ergänzend ist es in der Vorrichtung 15b gemäß den Figuren 4 und 5 möglich, dass an die jeweilige Verpackung 1 zumindest eine Grifflasche 13 angebracht wird oder zumindest eine Grifflasche 13 in die Lagen 3, 4, 5, 6, insbesondere in die beiden äußeren Lagen 3, 6, eingebracht wird, insbesondere eingestanzt wird. Dieser ergänzende Herstellungsschritt ist im Ausführungsbeispiel gemäß den Figuren 4 und 5 in der Vorrichtung 15b jedoch nicht ausgeführt.

Ergänzend ist es möglich, dass jeweils ein Teil der äußeren Lage 3, 6 und/oder jeweils ein Teil der inneren Lage 4, 5 als Etikett 12 für das Verpackungsgut gestaltet ist oder wird, wobei beim Herausnehmen des Verpackungsgutes aus der hergestellten Verpackung 1 das Etikett 12 auf dem Verpackungsgut verbleibt.

Insbesondere bei der Zuführung von einer einzigen Folienlage ist es möglich, sowohl auf die inneren Lagen 4, 5 als auch auf die beiden äußeren Lagen 3, 6 jeweils ein Etikett 12 einzubringen, da die jeweiligen Lagen 3, 4, 5, 6 jeweils rapportgenau der jeweiligen Einheit im Schweißturm 21 zugeführt werden. Die Zuführung der jeweiligen Lagen 3, 4, 5, 6 ist dabei gemäß vorhergehender Beschreibung rapportunabhängig.

Die Etiketten 12 werden dabei bevorzugt jeweils im Bereich der Fächer 7a, 7b, 7c, 7d, 7e, 7f angeordnet.

Die Form der Etiketten 12 wird dabei jeweils vor dem Längsschweißen eingebracht.

Insbesondere beim Rand eines Etikettes 12 wird eine Perforation oder ein Vorschnitt zum Herausnehmen des Etikettes 12 eingebracht und die Etiketten 12 werden bevorzugt mit einem Reaktivklebstoff auf der Seite der jeweiligen Lage 3, 4, 5, 6, die in Richtung Verpackungsgut weist, versehen. Es ist möglich, die Perforation oder den Vorschnitt mit Hilfe des Mittels zum Einbringen einer Trennperforation 19c mit einzubringen.

In der Vorrichtung 15b gemäß den Figuren 4 und 5 wird in die vier Lagen 3, 4, 5, 6 kein Etikett 12 während der Herstellung der Verpackungen 1 gemäß Figur 1 eingebracht.

Nachfolgend wird ein alternatives Verfahren zum Herstellen von zumindest ein Fach 7a, 7b, 7c aufweisenden Verpackungen 1 aus Kunststofffolie für Verpackungsgüter, insbesondere für Behälter, eine zugehörige Verpackung 1 sowie eine zugehörige Vorrichtung beschrieben. Zunächst werden die Verpackungen 1 beschrieben:

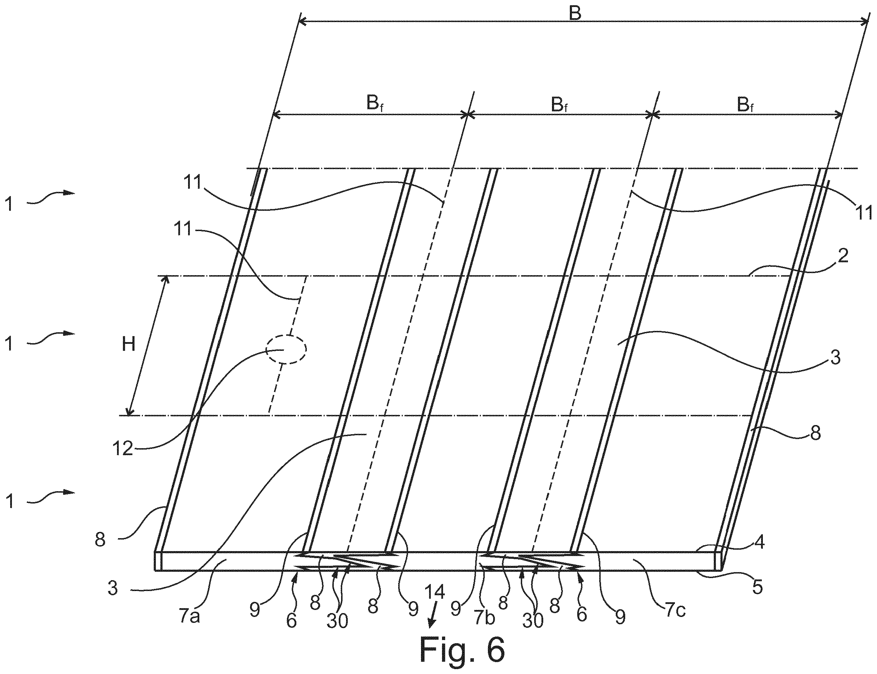

In Figur 6 sind mehrere Verpackungen 1 dargestellt. Eine einzelne Verpackung 1 weist im Ausführungsbeispiel eine Höhe H von etwa 152 mm und eine Breite B von etwa 327 mm auf. Andere Abmessungen sind alternativ möglich, wobei diese im Ausführungsbeispiel nicht bei der jeweiligen Verpackung 1 vorliegen.

Die einzelne Verpackung 1 besteht aus mehreren Lagen 3, 4, 5, 6 aus Kunststoffolie, wobei im Ausführungsbeispiel die inneren Lagen 4, 5 als eine bidirektional schrumpfbare Kunststoffolie ausgestaltet sind.

Die inneren Lagen 4, 5 der jeweiligen Verpackung 1 sind im Rahmen der Herstellung der Verpackung 1 aus jeweils einer oberen, einteiligen inneren Lage 4 und einer unteren, einteiligen inneren Lage 5 hergestellt worden. Es bildeten sich bei der jeweils hergestellten Verpackung 1 gemäß Figur 6 mehrere Abschnitte an inneren Lagen 4, 5 aus, die zusammen die ursprüngliche im Rahmen der Herstellung verwendeten inneren Lagen 4, 5 bilden. Es wird folglich in der nachfolgenden Beschreibung keine Unterscheidung zwischen abschnittsweise vorkommenden inneren Lagen 4, 5, die einen Teil der jeweils zugehörigen inneren Lage 4, 5 bilden, und den gesamten ungeteilten inneren Lagen 4, 5 vorgenommen, außer dieses ist von besonderer Bedeutung.

Eine jeweilige Verpackung 1 weist gemäß Figur 6 drei Fächer 7a, 7b, 7c in einer Reihe auf, die insbesondere durch die inneren Lagen 4, 5 gebildet werden. Es bildet sich somit eine einreihige Verpackung aus. Diese ist unter dem Begriff Snake-Variante, Snake-Kette oder Kettensleeve bekannt. Die einzelnen Fächer 7a, 7b, 7c einer Verpackung 1 weisen im Ausführungsbeispiel jeweils eine Breite B_{f} von etwa 109 mm auf. Mehrere Verpackungen 1 bilden eine Verpackungsreihe gemäß Figur 6
Gemäß Figur 6 sind die außen angeordneten inneren Lagen 4, 5 an der Außenseite einer jeweiligen Verpackung 1 mit einer Längsschweißnaht 8 verschweißt. Ferner sind die inneren Lagen 4, 5 auch im Bereich einer jeweiligen Seitenfalte 30, die die Verpackung 1 gemäß Figur 1 mehrfach aufweist, mittels einer Längsschweißnaht 8 verschweißt. Die Seitenfalte 30 im Bereich eines Fachs 7a, 7b, 7c einer Verpackung 1 ermöglicht ein späteres einfaches Befüllen mit Verpackungsgut in das jeweils zugehörige Fach 7a, 7b, 7c.

Die vier äußeren Lagen 3, 6 der jeweiligen Verpackungen 1 sind jeweils nach Art eines Streifens ausgebildet sind und mit der zugehörigen inneren Lage 4, 5 mittels einer Längsschweißnaht 9 gemäß Figur 6 im Bereich der zugehörigen Seitenfalte 30 verschweißt. Der Begriff Streifen ist auch unter dem Begriff Trennsteg oder Verbindungsstreifen bekannt. So ist gemäß Figur 6 die eine in streifenform ausgebildete äußere Lage 3 mit den beiden zugehörigen abschnittsweise ausgebildeten inneren Lage 4 jeweils mittels einer Längsschweißnaht 9 verschweißt. Die andere der beiden äußeren Lagen 6 ist mit den abschnittsweise ausgebildeten benachbarten inneren Lage 5 auch jeweils mittels einer Längsschweißnaht 9 verschweißt. Entsprechendes gilt jeweils für die anderen als Streifen vorliegenden äußeren Lagen 3, 6.

Die einzelnen Verpackungen 1 in einer Verpackungsreihe sind jeweils durch eine Rapportperforation 2 voneinander trennbar, die durch alle Lagen 3, 4, 5, 6 hindurchgeht und senkrecht zu den Längsschweißnähten 8 der inneren Lagen 4, 5 in die jeweilige Verpackung 1 eingestanzt ist. Die Rapportperforation 2 ist dabei mit einem Abstand der Höhe H, die der Höhe H der Fächer 7a, 7b, 7c entspricht, in die Lagen 3, 4, 5, 6 jeweils eingebracht.

Die einzelnen Fächer 7a, 7b, 7c der jeweiligen Verpackung 1 sind mittels Trennperforationen 11 voneinander trennbar, wobei die Trennperforation 11 jeweils durch die beiden äußeren Lagen 3, 6 hindurch in die beiden äußeren Lagen 3, 6 gemäß Figur 6 eingestanzt ist.

Ergänzend ist es möglich, dass in die abschnittsweise ausgebildeten inneren Lagen 4, 5 ein Etikett 12 eingebracht ist, insbesondere eingestanzt ist. Ferner ist es möglich eine weitere Trennperforation 11 im Bereich der Fächer 7a, 7b, 7c einzubringen, die an das jeweilige Etikett 12 angrenzt. Bevorzugt weist bei dem Vorhandensein von solchen Etiketten 12 mit Trennperforation 11 im Bereich des zugehörigen Fachs 7a, 7b, 7c die Verpackung 1 keine Trennperforationen 11 im Bereich der äußeren Lagen 3, 6 auf.

Beispielhaft ist in Figur 6 in einem Fach 7a einer Verpackung 1 ein Etikett 12 und eine weitere Trennperforation 11 beispielhaft gestrichelt angedeutet. Im Ausführungsbeispiel ist das Etikett 12, um das im Ausführungsbeispiel auch eine Perforation zum Heraustrennen vorhanden ist, und die Trennperforation 11 in die obere abschnittsweise ausgebildete innere Lage 4 eingestanzt (gestrichelt dargestellt).

Die Verpackung 1 reißt an der gestrichelt angedeuteten Trennlinie 11 und um die Perforation um das Etikett 12 herum ein, so dass das Verpackungsgut aus der Verpackung 1 bei einer Entnahme zusammen mit dem Etikett 12 herausgerissen wird.

Das Etikett 12 verbleibt beim Herausnehmen des Verpackungsguts aus der jeweiligen Verpackung 1 deshalb an dem Verpackungsgut, da das Etikett 12 in Richtung Verpackungsgut gerichtet einen Reaktivklebstoff oder dergleichen aufweist, mittels dem das Etikett 12 an dem Verpackungsgut haftet. Das Fach 7a ist somit leicht zu öffnen und das Verpackungsgut ist leicht aus der Verpackung 1 zu entnehmen.

Aus der WO 2011/116851 A1 sind derartige Etiketten und ein Verfahren zur Herstellung von Etiketten aufweisenden Verpackungen mittels Querschweißen bekannt.

Gemäß vorhergehenden Ausführungen weisen die Verpackungen 1 gemäß Figur 6 kein Etikett 12 im Bereich der Fächer 7a, 7b, 7c auf.

Ferner ist in Figur 6 die Produktionsrichtung 14 zur Herstellung der in Figur 6 dargestellten Verpackung 1 dargestellt.

Bevorzugt sind die in Figur 6 hergestellten Verpackungen 1 auf einer Aufwickelrolle aufgerollt, so dass sie anschließend in einer anderen Vorrichtung von dieser Rolle mit Verpackungsgut befüllt werden können.

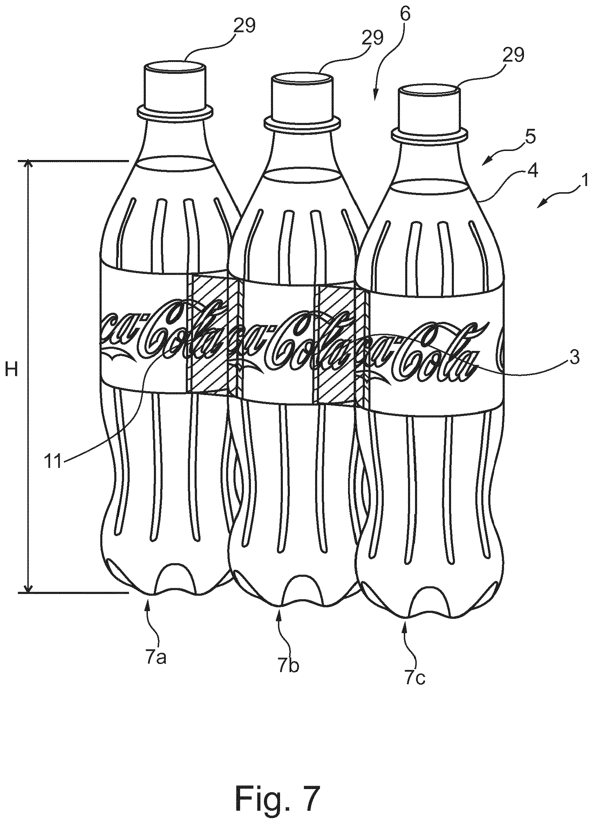

In den Figuren 7 bis 10 ist jeweils eine einzige Verpackung 1 gemäß Figur 6 beispielhaft dargestellt.

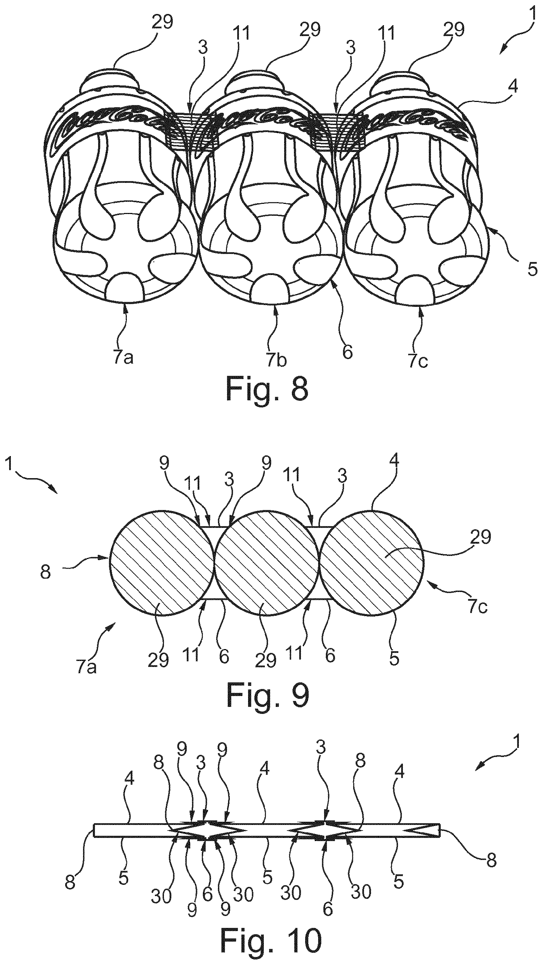

In den Figuren 7 bis 9 ist die einzeln dargestellte Verpackung 1 jeweils mit einem Verpackungsgut in Form von drei Flaschen 29 befüllt. Die Flaschen 29 sind dabei gemäß den Figuren 7 bis 9 jeweils in ein zugehöriges Fach 7a, 7b, 7c eingesetzt. So weist gemäß Figur 9 das Fach 7a eine Flasche 29 auf, das Fach 7b eine Flasche 29 auf und das Fach 7c eine Flasche 29 auf. Die drei Fächer 7a, 7b, 7c werden dabei jeweils durch die inneren Lagen 4, 5 gemäß vorhergehender Beschreibung gebildet.

Damit die drei Flaschen 29 in der Verpackung 1 stabilisiert werden, sind die inneren Lagen 4, 5 mit den vier als Streifen ausgebildeten äußeren Lagen 3, 6 gemäß Figur 6 verschweißt. Ferner sind die drei Flaschen 29 in der jeweiligen Verpackung mit Hilfe der bidirektional schrumpfbaren Kunststofffolie in der jeweiligen Verpackung 1 mittels vorheriger Hitzeeinwirkung eingeschrumpft.

Zur Entnahme einer einzelnen Flasche 29 aus der jeweiligen Verpackung 1 gemäß den Figuren 7 bis 9 wird die Flasche 29 zusammen mit dem sie umgebenden Teil der inneren Lagen 4, 5 und einem Teil der zugehörigen äußeren Lagen 3, 6 an den beiden Trennperforationen 11 von dem restlichen Teil der Verpackung 1 abgetrennt. Ein Teil der Lagen 3, 4, 5, 6 bleibt somit um die entnommene Flasche 29 herum vorhanden. Dieser Teil der jeweiligen Lagen 3, 4, 5, 6 kann passend mit einem Logo oder dergleichen bedruckt sein.

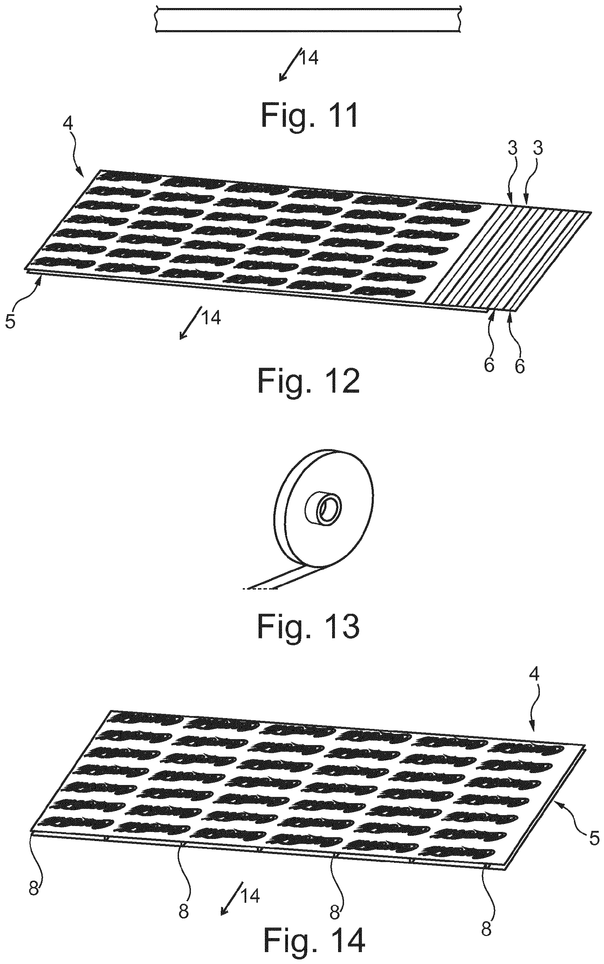

In den Figuren 11 bis 18 wird die Herstellung von Verpackungen 1 dargestellt, die in den Figuren 6 bis 10 dargestellt sind.

Solche Verpackungen 1 werden in einer Vorrichtung zum Herstellen von zumindest einem Fach 7a, 7b, 7c aufweisenden Verpackungen 1 aus Kunststofffolie für Verpackungsgüter, insbesondere für Behälter, hergestellt. Die Behälter können beispielsweise Flaschen 29 sein. Eine Vorrichtung ist in den Figuren 6 bis 18 nicht dargestellt.

Die Vorrichtung weist zumindest eine Abwickelrolle mit Abwickler zur Zuführung zumindest einer Folienlage gemäß Figur 11 auf. Aus der zumindest einen Folienlage wird die jeweilige Verpackung 1 dann hergestellt wird. Ferner weist die Vorrichtung zumindest ein Faltdreieck auf, mittels der die zugeführte Folienlage gefaltet wird.

Ferner weist die Vorrichtung ein Mittel zum Einbringen einer Trennperforation auf.

Daneben weist die Vorrichtung zumindest einen Längsschweißbalken oder zumindest ein Längsschweißbalkenpaar auf. Die Länge eines Längsschweißbalkens oder die Länge eines Längsschweißbalkens eines Längsschweißbalkenpaares ist zwischen 200 mm und 300 mm, vorzugsweise 250 mm. Der Längsschweißbalken oder das Längsschweißbalkenpaar ist in der Vorrichtung senkrecht zur Zuführung der zu verschweißenden inneren Lagen in der Vorrichtung angeordnet.

Es ist möglich, dass die inneren Lagen 4, 5 während des Verschweißens der äußeren Lagen 3, 6 mittels zumindest eines Mittels, beispielsweise einem Trennlack oder einem mechanischen Trennmittel, beispielsweise eine Isolierfahne aus Teflon, voneinander getrennt werden, um ein Verschweißen der beiden inneren Lagen 4, 5 zu verhindern.

Ferner weist die Vorrichtung ein Mittel zum Einbringen einer Rapportperforation auf. Mittels des Mittels zur Erzeugung einer Rapportperforation wird in die verschweißten Lagen 3, 4, 5, 6 gemäß Figur 6 senkrecht zur Längsschweißnaht 8 der inneren Lagen 4, 5 zumindest eine Rapportperforation 2 eingebracht.

Daneben weist die Vorrichtung einen Tänzer mit Vorzugswalzenpaar auf.

Die Vorrichtung weist ferner bevorzugt eine Wickeleinheit auf. Die Wickeleinheit weist bevorzugt einen Aufwickler zum Aufwickeln der hergestellten Verpackungen 1 auf. Nach der Herstellung der in den Figuren 6 bis 10 dargestellten Verpackungen 1 werden die Verpackungen 1 dabei bevorzugt auf einer Aufwickelrolle mit Hilfe des Aufwicklers aufgerollt.

Nachfolgend wird das Verfahren zur Herstellung der in den Figuren 6 bis 10 dargestellten Verpackungen 1 beschrieben.

Zur Herstellung von Verpackungen 1 wird gemäß Figur 11 im Ausführungsbeispiel eine einzige Folienlage von einer Abwickelrolle in Produktionsrichtung 14 mit Hilfe des Abwicklers abgewickelt. Für die in Figur 11 dargestellte Folienlage wird eine bidirektional schrumpfbare Kunststofffolie verwendet.

Im Ausführungsbeispiel werden die inneren Lagen 4, 5 und die äußeren Lagen 3, 6 aus dieser einzigen Folienlage hergestellt. Dazu wird die Folienlage mit Hilfe eines einzigen Faltdreieckes umgefaltet, so dass sich zunächst zwei übereinander liegende Lagen 4, 5 ausbilden. Die beiden Lagen 4, 5 sind in Figur 12 dargestellt. Anschließend werden die beiden gefalteten Lagen 4, 5 im Bereich der Faltkante in zwei separate Lagen 4, 5 getrennt.

Ein Teil der beiden Lagen 4, 5 bildet unter anderem die späteren äußeren Lagen 3, 6.

Anschließend werden die äußeren Lagen 3, 6 aus den beiden inneren Lagen 4, 5 mittels mechanischem Trennen oder dergleichen hergestellt. Nach dem Abtrennen der in Streifenform ausgebildeten äußeren Lagen 3, 6 von dem Teil der beiden Lagen 4, 5 liegen folglich zwei inneren Lagen 4, 5 und vier Streifen in Form von zwei äußeren Lagen 3 und zwei äußeren Lagen 6 vor. Die äußeren Lagen 3, 6 sind gemäß Figur 12 somit in Streifenform ausgeführt. Die Lagen 3, 4, 5, 6 bewegen sich während der Herstellung der Verpackungen dabei immer in Produktionsrichtung 14.

Anschließend wird jeweils parallel zur noch zu schweißenden Längsschweißnaht 8 der inneren Lagen 4, 5 zumindest eine Trennperforation 11 in die äußeren Lagen 3, 6 mittels des Mittels zur Erzeugung einer Trennperforation eingebracht, insbesondere eingestanzt. Gemäß Figur 6 befindet sich die Trennperforation 11 jeweils im mittleren Bereich der als Streifen ausgebildeten äußeren Lagen 3, 6 und geht jeweils gerade durch die Lagen 3, 6.

Alternativ und nicht im Ausführungsbeispiel durchgeführt ist es möglich, dass die inneren Lagen 4, 5 aus einer Folienlage, insbesondere einer umgefalteten und/oder getrennten Folienlage, und die äußeren Lagen 3, 6 aus einer weiteren Folienlage, insbesondere einer umgefalteten und/oder getrennten Folienlage, hergestellt werden.

Alternativ und nicht im Ausführungsbeispiel durchgeführt ist es möglich, dass die beiden inneren Lagen 4, 5 aus einer einzigen Folienlage, insbesondere einer umgefalteten und/oder getrennten Folienlage, hergestellt werden und dass die äußeren Lagen 3, 6 jeweils durch zumindest eine separate Lage hergestellt werden. Eine solche separate auf einer Rolle aufgerollte Lage ist beispielhaft in Figur 13 dargestellt.

Die in Figur 13 dargestellte Lage bildet beispielhaft eine der äußeren Lagen 3 einer Verpackung 1. Die Lage auf der Rolle ist gemäß Figur 13 mit einem Reaktivkiebstoff, vorzugsweise einem Hotmelt, beleimt. Mittels des Reaktivklebstoff ist es möglich, dass die äußere Lage 3 mit den schon verschweißten inneren Lagen 4, 5 verleimt wird, so dass die äußere Lage 3 passend an den inneren Lagen 4, 5 befestigt ist. Entsprechendes gilt in dieser alternativen Ausgestaltung für die andere innere Lage 3 und die anderen äußeren Lagen 6. Beleimte oder verleimte Lagen 3, 6 auf separaten Rollen liegen im Ausführungsbeispiel nicht vor.

Zum Herstellen der in den Figuren 6 bis 10 dargestellten Verpackungen 1 werden im Ausführungsbeispiel anschließend die beiden übereinander liegenden inneren Lagen 4, 5 aus Kunststofffolie mit zumindest einer Längsschweißnaht 8 kontinuierlich in Produktionsrichtung 14 verschweißt.

Im Ausführungsbeispiel gemäß Figur 14 werden die beiden inneren Lagen 4, 5 mit vier Längsschweißnähten 8 kontinuierlich verschweißt. Die beiden zu verschweißenden Lagen 4, 5 werden dabei im Ausführungsbeispiel in einem Schweißturm mittels Längsschweißbalkenpaaren verschweißt. Jede Längsschweißnaht 8 wird dabei mittels zumindest eines Längsschweißbalkenpaares verschweißt.

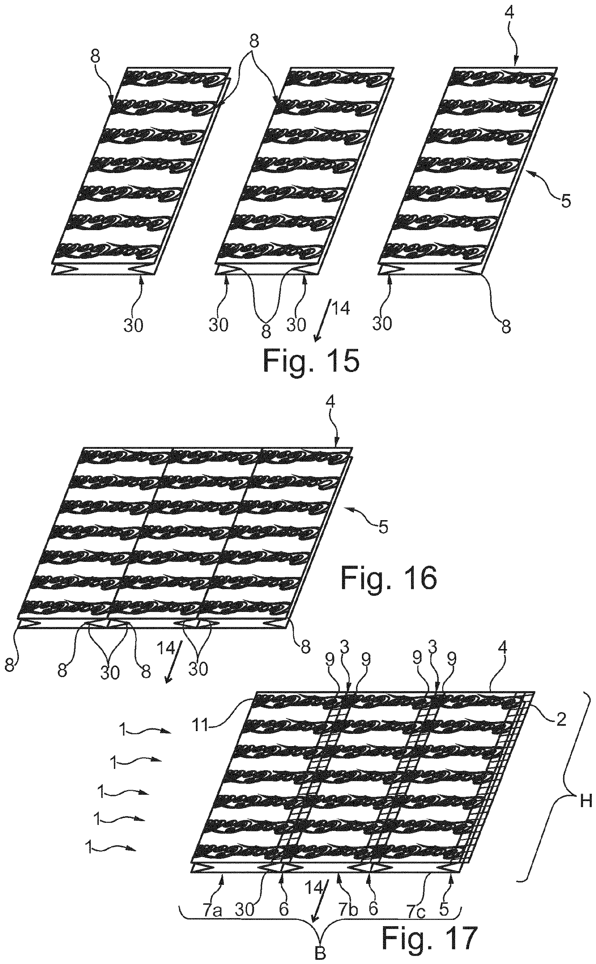

Anschließend werden die beiden verschweißten inneren Lagen 4, 5 vor dem Befestigen von äußerer Lage 3, 6 mit zugehöriger innerer Lage 4, 5 jeweils im Bereich der beiden innenliegenden Längsschweißnähte 8 der beiden inneren Lagen 4, 5 gemäß Figur 15 in Produktionsrichtung 14 geschnitten, so dass diese geschnittenen inneren Lagen 4, 5 ein Teil der inneren Lagen 4, 5 bilden. Die in drei Teile geschnittenen inneren Lagen 4, 5 sind in Figur 15 dargestellt.

Anschließend wird in die geschnittenen inneren Lagen 4, 5 gemäß Figur 15 vor dem Befestigen von äußeren Lagen 3, 6 mit zugehörigen inneren Lagen 4, 5 jeweils eine Seitenfalte 30 im Bereich des vorhergehend durchgeführten Schnittes im Bereich der geschnittenen Längsschweißnähte 8 eingebracht. Gemäß Figur 6 und gemäß Figuren 15 bis 17 bilden sich somit vier Seitenfalten 30 in der später hergestellten Verpackung 1 aus.

Anschließend werden die beiden in drei Teile aufgeteilten zumindest eine Seitenfalte 30 im Bereich der geschnittenen Längsschweißnaht 8 aufweisenden geschnittenen Lagen 4, 5 vor dem Befestigen von äußeren Lagen 3, 6 mit zugehörigen inneren Lagen 4, 5 jeweils zueinander auf die herzustellende Breite B der Verpackung 1 positioniert. Das Positionieren auf die herzustellende Breite B der Verpackung 1 ist in Figur 16 dargestellt.

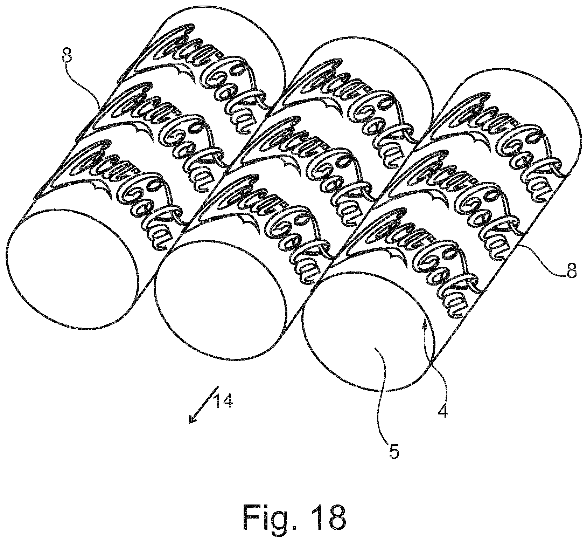

Anschließend werden die geschnittenen inneren Lagen 4, 5 vor dem Befestigen von den äußeren Lagen 3, 6 mit zugehörigen inneren Lagen 4, 5 jeweils vorgeöffnet. Die vorgeöffneten Lagen 4, 5 sind beispielhaft in Figur 18 dargestellt.

Um ein Verschweißen der inneren Lagen 4, 5 beim Befestigen der äußeren Lagen 3, 6 mit den zugehörigen inneren Lage 4, 5 zu verhindern, wurde vor dem Verschweißen der inneren Lagen 4, 5 im Ausführungsbeispiel zumindest ein Mittel in Form eines mechanischen Trennmittels, im Ausführungsbeispiel mehrere Isolierfahnen aus Teflon, zwischen die beiden inneren Lagen 4, 5 eingebracht. Die Isolierfahnen werden somit vor dem Verschweißen der beiden inneren Lagen 4, 5 zwischen die inneren Lagen 4, 5 mehrfach eingebracht. Die Isolierfahnen werden somit von den inneren Lagen 4, 5 umhüllt, wobei die inneren Lagen 4, 5 kontinuierlich über die Isolierfahnen hinweggleiten. Die Isolierfahnen sind in den Figuren 6 bis 18 nicht dargestellt.

Alternativ und nicht im Ausführungsbeispiel durchgeführt ist es möglich, als Mittel einen Trennlack zu verwenden, wobei die Innenseite der einen inneren Lage 4 und/ oder die Innenseite der zweiten inneren Lage 5 mit Trennlack zumindest in einem Bereich beschichtet werden oder beschichtet sind, um ein Verschweißen zu verhindern.

Anschließend werden die als Streifen ausgebildeten äußeren Lagen 3, 6 auf die positionierten und verschweißten inneren Lagen 4, 5 gemäß Figur 17 während der Bewegung der Lagen 3, 4, 5, 6 in Produktionsrichtung 14 mit gleicher Bewegungsgeschwindigkeit wie die der inneren Lagen 4, 5 aufgelegt.

Dabei werden jeweils die beiden als Streifen ausgebildeten äußeren Lage 3 jeweils auf die zugehörigen, getrennten inneren Lagen 4 aufgelegt und die beiden als Streifen ausgebildeten äußeren Lagen 6 jeweils auf die zugehörigen, getrennten inneren Lagen 5 gemäß Figur 17 aufgelegt. Es wird demzufolge auch auf der anderen Seite der schon verschweißten Lagen 4, 5 zumindest eine zweite äußere Lage 6 auf die schon verschweißten inneren Lagen 4, 5 aufgelegt.

Vor dem Verschweißen der zugehörigen äußeren Lagen 3, 6 mit den zugehörigen inneren Lagen 4, 5 werden die äußeren Lagen 3, 6 im Ausführungsbeispiel so aufgelegt, dass vor dem Befestigen von äußerer Lage 3, 6 mit zugehöriger innerer Lage 4, 5 alle äußeren Lagen 3, 6 schon aufgelegt sind.

Anschließend wird die jeweilige äußere Lage 3, 6 mit der zugehörigen inneren Lage 4, 5 mittels zumindest einer Längsschweißnaht 9 gemäß Figur 6 verschweißt, wobei die schon vorher verschweißten inneren Lagen 4, 5 mit Hilfe der Isolierfahnen dabei voneinander getrennt werden. Mittels der Isolierfahnen wird ein verschweißen der beiden inneren Lagen 4, 5 verhindert. Ein Verschweißen findet beispielsweise auch in dem Schweißturm der nicht dargestellten Vorrichtung statt, der im Ausführungsbeispiel dafür auch mehrere Längsschweißbalkenpaare aufweist.

Gemäß Figur 6 werden die jeweils als ein Streifen ausgebildeten äußern Lagen 3 jeweils mittels zwei Längsschweißnähten 9 mit den zugehörigen inneren Lagen 4 kontinuierlich verschweißt.

Auch die jeweils als Streifen ausgebildeten äußeren Lagen 6 werden jeweils mittels zweier Längsschweißnähte 9 mit den zugehörigen anderen inneren Lagen 5 kontinuierlich verschweißt.

Alternativ ist es möglich, die jeweiligen Lagen 3, 4, 5, 6 gemäß vorhergehender Beschreibung ausschließlich getaktet oder teilweise getaktet und teilweise kontinuierlich zu verschweißen. Dieses ist im Ausführungsbeispiel jedoch nicht der Fall.

Anschließend wird in die Lagen 3, 4, 5, 6 senkrecht zur Längsschweißnaht 8 der inneren Lagen 4, 5 gemäß Figur 6 zumindest eine Rapportperforation 2 in die Lagen 3, 4, 5, 6 mittels des Mittels zur Erzeugung einer Rapportperforation eingebracht, insbesondere eingestanzt. Die Rapportperforationen 2 werden dabei mit einem Abstand der Höhe H in die aufeinanderliegenden Lagen 3, 4, 5, 6 eingebracht.

Anschließend werden die Lagen 3, 4, 5, 6 mittels Vorzugswalzen dem Tänzer zugeführt. Die Aufgabe des Tänzers ist zum einen eine Korrekturfunktion. Zum anderen hat der Tänzer die Aufgabe einer Kompensationsfunktion.

Die Korrekturfunktion ergibt sich dadurch, dass beim Aufwickeln der Lagen auf dem Aufwickler sich der Geschwindigkeit aufgrund des sich verändernden Durchmessers der Aufwickelrolle verändert. Dieses korrigiert der Tänzer,

Zum anderen weist der Aufwickler zwei Arme für jeweils eine Aufwickelrolle auf, so dass ein kontinuierliches Aufwickeln auf jeweils einer der beiden Aufwickelrollen möglich ist. Beim Wechseln des einen Armes des Aufwicklers zu dem anderen Arm des Aufwicklers kompensiert der Tänzer diesen zeitlich dauernden Wendevorgang. Ein Wechsel ist beispielsweise notwendig, wenn der maximal aufzuwickelnde Durchmesser der Aufwickelrolle erreicht ist.

Anschließend werden die Verpackungen 1 gemäß Figur 6 auf einer Aufwickelrolle des Aufwicklers in der Vorrichtung aufgerollt.

Ergänzend und nicht in den Figuren 6 bis 18 ausgeführt ist es während der Herstellung möglich, an die jeweilige Verpackung 1 zumindest eine Grifflasche anzubringen oder zumindest eine Grifflasche in die Lagen 3, 4, 5, 6 einzubringen, insbesondere einzustanzen.

Ergänzend ist es weiterhin möglich, dass jeweils ein Teil der inneren Lage 4, 5 als Etikett 12 für das Verpackungsgut gestaltet ist oder wird, wobei beim Herausnehmen des Verpackungsguts aus der Verpackung 1 das Etikett 1 auf dem Verpackungsgut verbleibt.

Ferner ist es ergänzend möglich, am Rand eines Etiketts 12 eine Perforation oder einen Vorschnitt zum Herausnehmen des Etikettes 12 einzubringen und die Etiketten 12 mit einem Reaktivklebstoff auf der Seite der jeweiligen Lage 4, 5, die in Richtung Verpackungsgut weist, zu versehen.

Die Etiketten 12 werden dabei jeweils im Bereich der Fächer 7a, 7b, 7c angeordnet.

Während der Herstellung solcher Etiketten 12 werden diese jeweils vor dem Längsschweißen in die Lagen 4, 5 eingebracht.

Gemäß vorhergehenden Ausführungen ist im Ausführungsbeispiel gemäß den Figuren 6 bis 18 weder eine Grifflasche angebracht noch ein Teil der Lagen 4, 5 als Etikett 12 gestaltet,

Die gemäß dem vorhergehend beschriebenen Verfahren hergestellten Verpackungen 1 gemäß den Figuren 6 bis 10 lassen sich jeweils in einer passenden Vorrichtung mit Verpackungsgut, beispielsweise Flaschen 29, befüllen.

Eine befüllte Verpackung 1 gemäß der vorhergehenden Ausführung ist beispielhaft in den Figuren 7 bis 9 dargestellt.

## Patentansprüche

1. Verfahren zum Herstellen von zumindest ein Fach (7a, 7b, 7c, 7d, 7e, 7f) aufweisenden Verpackungen (1) aus Kunststofffolie für Verpackungsgüter, insbesondere für Behälter, wobei zwei übereinander liegende innere Lagen (4, 5) aus Kunststofffolie mit zumindest einer Längsschweißnaht (8) kontinuierlich oder getaktet verschweißt werden, anschließend zumindest zwei äußere Lagen (3, 6) aus Kunststofffolie auf die beiden verschweißten inneren Lagen (4, 5) aufgelegt werden und an diesen schon verschweißten inneren Lagen (4, 5) kontinuierlich oder getaktet befestigt werden, **dadurch gekennzeichnet, dass** die zu verschweißenden Lagen (3, 4, 5, 6) in einer Bewegungsrichtung senkrecht einer Zuführrichtung (27) der zu verschweißenden inneren Lage (4, 5) mittels eines Längsschweißbalkens oder eines Längsschweißbalkenpaares (22a, 22b, 22c) verschweißt werden, wobei die beiden inneren Lagen (4, 5) vor dem Befestigen von äußerer Lage mit zugehöriger innerer Lage jeweils im Bereich der Längsschweißnaht (8) der beiden inneren Lagen (4, 5) geschnitten werden, so dass diese geschnittenen inneren Lagen einen Teil der inneren Lagen bilden und der Teil der inneren Lagen jeweils ein Fach für ein Verpackungsgut aufweist, wobei weiterhin in die geschnittenen inneren Lagen vor dem Befestigen von äußerer Lage mit zugehöriger innerer Lage jeweils eine Seitenfalte im Bereich der geschnittenen Längsschweißnaht der geschnittenen inneren Lagen eingebracht wird.

2. Verfahren nach Anspruch 1, **dadurch gekennzeichnet, dass** die äußere Lage (3, 6) mit zumindest einer Längsschweißnaht (9) mit den schon verschweißten inneren Lagen (4, 5) verschweißt wird, wobei die beiden schon vorher verschweißten inneren Lagen (4, 5) mit Hilfe zumindest eines Mittels voneinander getrennt werden, um ein Verschweißen der beiden inneren Lagen (4, 5) zu verhindern, oder dass die zu verschweißenden Lagen (3, 4, 5, 6) in einer Bewegungsrichtung senkrecht zur Zuführrichtung (27) der zu verschweißenden inneren Lagen (4, 5) mittels des Längsschweißbalkens oder des Längsschweißbalkenpaares (22a, 22b, 22c) verschweißt werden, oder dass die äußere Lage (3, 6) mit den schon verschweißten inneren Lagen (4, 5) verleimt wird, so dass die äußere Lage (3, 6) an einer der inneren Lagen (4, 5) befestigt ist.

3. Verfahren nach Anspruch 2, **dadurch gekennzeichnet, dass** als Mittel ein Trennlack verwendet wird oder als Mittel ein mechanisches Trennmittel, insbesondere eine Isolierfahne (10), insbesondere aus Teflon, verwendet wird.

4. Verfahren nach Anspruch 3, **dadurch gekennzeichnet, dass** die Innenseite der einen inneren Lage (4) und/oder die Innenseite der zweiten inneren Lage (5) mit Trennlack beschichtet werden oder beschichtet sind, oder **dass** die Isolierfahne (10) vor dem Verschweißen der beiden inneren Lagen (4, 5) zwischen die beiden inneren Lagen (4, 5) eingebracht wird.

5. Verfahren nach einem der Ansprüche 1 bis 4, **dadurch gekennzeichnet, dass** die zu verschweißenden Lagen (3, 4, 5, 6) mittels zumindest eines Längsschweißbalkens oder mittels zumindest eines Längsschweißbalkenpaares (22a, 22b, 22c) verschweißt werden, oder **dass** die äußere Lage (3, 6) vor dem Verleimen mit einem Reaktivklebstoff, vorzugsweise mit einem Hotmelt, beleimt wird oder die äußere Lage (3, 6) mit einem Reaktivklebstoff, vorzugsweise mit einem Hotmelt, beleimt ist.

6. Verfahren nach einem der Ansprüche 1 bis 5, **dadurch gekennzeichnet, dass** die beiden inneren Lagen (4, 5) vor dem Befestigen von äußerer Lage (3, 6) mit zugehöriger innerer Lage (4, 5) jeweils im Bereich der Längsschweißnaht (8) der beiden inneren Lagen (4, 5) geschnitten werden, so dass diese geschnittenen inneren Lagen (4, 5) einen Teil der inneren Lagen (4, 5) bilden, wobei insbesondere in die geschnittenen inneren Lagen (4, 5) vor dem Befestigen von äußerer Lage (3, 6) mit zugehöriger innerer Lage (4, 5) jeweils eine Seitenfalte (30) im Bereich der geschnittenen Längsschweißnaht (8) der geschnittenen inneren Lagen (4, 5) eingebracht wird.

7. Verfahren nach Anspruch 6, **dadurch gekennzeichnet, dass** die zumindest zwei jeweils die Seitenfalte (30) im Bereich der Längsschweißnaht (8) aufweisenden geschnittenen inneren Lagen (4, 5) vor dem Befestigen von äußerer Lage (3, 6) mit zugehöriger innerer Lage (4, 5) jeweils zueinander auf eine herzustellende Breite (B) der Verpackung (1) positioniert werden, wobei insbesondere die geschnittenen inneren Lagen (4, 5) vor dem Befestigen von äußerer Lage (3, 6) mit zugehöriger innerer Lage (4, 5) jeweils vorgeöffnet werden.

8. Verfahren nach einem der Ansprüche 1 bis 7, **dadurch gekennzeichnet, dass** auf der anderen Seite der schon verschweißten Lagen (4, 5) zumindest eine zweite äußere Lage (3, 6) aus Kunststofffolie auf die schon verschweißten inneren Lagen (4, 5) aufgelegt wird und dass die zweite weitere äußere Lage (3, 6) mit der zweiten inneren Lage (4, 5) befestigt wird, insbesondere verschweißt oder verleimt wird, wobei insbesondere die äußeren Lagen (3, 6) so aufgelegt werden, dass vor dem Befestigen von äußerer Lage (3, 6) mit zugehöriger innerer Lage (4, 5) beide äußere Lagen (3, 6) aufgelegt sind.

9. Verfahren nach einem der Ansprüche 1 bis 8, **dadurch gekennzeichnet, dass** parallel zur zu schweißenden Längsschweißnaht (8) der inneren Lagen (4, 5) zumindest eine Trennperforation (11) in zumindest eine Lage (3, 4, 5, 6) eingebracht wird, insbesondere eingestanzt wird, oder dass in die Lagen (3, 4, 5, 6) senkrecht zur Längsschweißnaht (8) der inneren Lagen (4, 5) zumindest eine Rapportperforation (2) eingebracht wird, insbesondere eingestanzt wird.

10. Verfahren nach einem der Ansprüche 1 bis 9, **dadurch gekennzeichnet, dass** die inneren Lagen (4, 5) und die äußeren Lagen (3, 6) aus einer einzigen Folienlage, insbesondere einer umgefalteten und/oder getrennten Folienlage, hergestellt werden oder die inneren Lagen (4, 5) aus einer Folienlage, insbesondere einer umgefalteten und/oder getrennten Folienlage, und die äußeren Lagen (3, 6) aus einer weiteren Folienlage, insbesondere einer umgefalteten und/oder getrennten Folienlage, hergestellt werden, wobei insbesondere die Folienlage von einer Abwickelrolle (16a, 16b, 16c) abgewickelt wird.

11. Verfahren nach einem der Ansprüche 1 bis 10, **dadurch gekennzeichnet, dass** jeweils ein Teil der äußeren Lage (3, 6) und/oder jeweils ein Teil der inneren Lage (4, 5) als Etikett (12) für das Verpackungsgut gestaltet ist oder wird, wobei beim Herausnehmen des Verpackungsgutes aus der Verpackung (1) das Etikett (12) auf dem Verpackungsgut verbleibt, wobei insbesondere die Form der Etiketten (12) jeweils vor dem Längsschweißen eingebracht wird und/oder die Etiketten (12) jeweils im Bereich der Fächer (7a, 7b, 7c, 7d, 7e, 7f) angeordnet werden.

12. Verfahren nach einem der vorhergehenden Ansprüche, **dadurch gekennzeichnet, dass** am Rand eines Etikettes (12) eine Perforation oder ein Vorschnitt zum Herausnehmen des Etikettes (12) eingebracht wird und die Etiketten (12) mit einem Reaktivklebstoff auf der Seite der jeweiligen Lage (3, 4, 5, 6), die in Richtung Verpackungsgut weist, versehen werden.

13. Vorrichtung (15a, 15b) zur Durchführung des Verfahrens zum Herstellen von zumindest ein Fach (7a, 7b, 7c, 7d, 7e, 7f) aufweisenden Verpackungen (1) aus Kunststofffolie für Verpackungsgüter, insbesondere für Behälter, wobei zwei übereinander liegende innere Lagen (4, 5) aus Kunststofffolie mit zumindest einer Längsschweißnaht (8) kontinuierlich oder getaktet verschweißt werden, anschließend zumindest zwei weitere äußere Lagen (3, 6) aus Kunststofffolie auf die beiden verschweißten inneren Lagen (4, 5) aufgelegt werden und an diesen schon verschweißten inneren Lagen (4, 5) kontinuierlich oder getaktet befestigt werden, wobei die zu verschweißenden Lagen (3, 4, 5, 6) in einer Bewegungsrichtung senkrecht einer Zuführrichtung (27) der zu verschweißenden inneren Lage (4, 5) verschweißt werden, wobei die beiden inneren Lagen (4, 5) vor dem Befestigen von äußerer Lage mit zugehöriger innerer Lage jeweils im Bereich der Längsschweißnaht (8) der beiden inneren Lagen (4, 5) geschnitten werden, so dass diese geschnittenen inneren Lagen einen Teil der inneren Lagen bilden und der Teil der inneren Lagen jeweils ein Fach für ein Verpackungsgut aufweist, wobei weiterhin in die geschnittenen inneren Lagen vor dem Befestigen von äußerer Lage mit zugehöriger innerer Lage jeweils eine Seitenfalte im Bereich der geschnittenen Längsschweißnaht der geschnittenen inneren Lagen eingebracht wird, **dadurch gekennzeichnet, dass** die Vorrichtung (15a, 15b) zumindest einen Längsschweißbalken oder zumindest ein Längsschweißbalkenpaar (22a, 22b, 22c) aufweist.

14. Vorrichtung (15a, 15b) nach Anspruch 13, **dadurch gekennzeichnet, dass** die Länge eines Längsschweißbalkens oder die Länge eines Längsschweißbalkens eines Längsschweißbalkenpaares (22a, 22b, 22c) zwischen 200 mm und 300 mm, vorzugsweise 250 mm, ist, wobei insbesondere der Längsschweißbalken oder das Längsschweißbalkenpaar (22a, 22b, 22c) senkrecht zur Zuführrichtung (27) der zu verschweißenden inneren Lagen (4, 5) in der Vorrichtung (1) angeordnet ist.

15. Vorrichtung (15a, 15b) nach einem der Ansprüche 13 oder 14, **dadurch gekennzeichnet, dass** die Vorrichtung (15a, 15b) zumindest eine Abwickelrolle (16a, 16b, 16c) zur Zuführung zumindest einer Folienlage aufweist, oder **dass** die Vorrichtung (15a, 15b) zumindest ein Faltdreieck (18a, 18b, 18c) aufweist, oder **dass** die Vorrichtung (15a, 15b) einen Aufwickler (26) zum Aufwickeln der hergestellten Verpackungen (1) aufweist.

## Claims

1. Method for producing packs (1) from plastic film for items to be packaged, in particular for containers, which packs have at least one compartment (7a, 7b, 7c, 7d, 7e, 7f), wherein two inner layers (4, 5) of plastic film that lie one on top of the other are welded together continuously or in cycles by way of at least one longitudinal weld seam (8), then at least two outer layers (3, 6) of plastic film are placed on the two welded-together inner layers (4, 5) and are fastened continuously or in cycles to these already welded-together inner layers (4, 5), **characterized in that** the layers (3, 4, 5, 6) to be welded together are welded together by means of a longitudinal welding bar or a longitudinal welding bar pair (22a, 22b, 22c) in a movement direction perpendicular to a feed direction (27) of the inner layer (4, 5) to be welded, wherein, before an outer layer is fastened to the associated inner layer, the two inner layers (4, 5) are cut in each case in the region of the longitudinal weld seam (8) of the two inner layers (4, 5), with the result that these cut inner layers form a part of the inner layers and each part of the inner layers has a compartment for an item to be packaged, wherein furthermore, before an outer layer is fastened to the associated inner layer, a respective side compartment is introduced into the cut inner layers in the region of the cut longitudinal weld seam of the cut inner layers.

2. Method according to Claim 1, **characterized in that** the outer layer (3, 6) is welded to the already welded-together inner layers (4, 5) by way of at least one longitudinal weld seam (9), wherein the two already previously welded-together inner layers (4, 5) are severed from one another using at least one means, in order to prevent the two inner layers (4, 5) from being welded together, or **in that** the layers (3, 4, 5, 6) to be welded together are welded together by means of the longitudinal welding bar or the longitudinal welding bar pair (22a, 22b, 22c) in a movement direction perpendicular to the feed direction (27) of the inner layers (4, 5) to be welded together, or **in that** the outer layer (3, 6) is glued to the already welded-together inner layers (4, 5), with the result that the outer layer (3, 6) is fastened to one of the inner layers (4, 5).

3. Method according to Claim 2, **characterized in that** a release coating is used as the means or a mechanical separating means, in particular an insulating strip (10), in particular composed of Teflon, is used as the means.

4. Method according to Claim 3, **characterized in that** the inner side of the one inner layer (4) and/or the inner side of the second inner layer (5) are or have been coated with a release coating, or **in that** the insulating strip (10) is introduced between the two inner layers (4, 5) before the two inner layers (4, 5) are welded together.

5. Method according to one of Claims 1 to 4, **characterized in that** the layers (3, 4, 5, 6) to be welded together are welded together by means of at least one longitudinal welding bar or by means of at least one longitudinal welding bar pair (22a, 22b, 22c), or **in that**, before the gluing, the outer layer (3, 6) is glue-coated with a reactive adhesive, preferably with a hotmelt, or the outer layer (3, 6) is glue-coated with a reactive adhesive, preferably with a hotmelt.

6. Method according to one of Claims 1 to 5, **characterized in that**, before an outer layer (3, 6) is fastened to the associated inner layer (4, 5), the two inner layers (4, 5) are cut in each case in the region of the longitudinal weld seam (8) of the two inner layers (4, 5), with the result that these cut inner layers (4, 5) form a part of the inner layers (4, 5), wherein, before an outer layer (3, 6) is fastened to the associated inner layer (4, 5), a respective side compartment (30) is introduced in particular into the cut inner layers (4, 5) in the region of the cut longitudinal weld seam (8) of the cut inner layers (4, 5).

7. Method according to Claim 6, **characterized in that**, before an outer layer (3, 6) is fastened to the associated inner layer (4, 5), the at least two cut inner layers (4, 5) which have the respective side compartment (30) in the region of the longitudinal weld seam (8) are positioned in each case in relation to one another with respect to a width (B) of the pack (1) that is to be produced, wherein, before an outer layer (3, 6) is fastened to the associated inner layer (4, 5), in particular the cut inner layers (4, 5) are each pre-opened.

8. Method according to one of Claims 1 to 7, **characterized in that** at least one second outer layer (3, 6) of plastic film is placed onto the already welded-together inner layers (4, 5) on the other side of the already welded layers (4, 5), and **in that** the second, further, outer layer (3, 6) is fastened, in particular welded or glued, to the second inner layer (4, 5), wherein in particular the outer layers (3, 6) are placed on such that the two outer layers (3, 6) are placed on before an outer layer (3, 6) is fastened to the respective inner layer (4, 5).

9. Method according to one of Claims 1 to 8, **characterized in that** at least one severing perforation (11) is introduced, in particular stamped, into at least one layer (3, 4, 5, 6) in a manner parallel to the longitudinal weld seam (8) of the inner layers (4, 5) that is to be welded, or **in that** at least one repeating-pattern perforation (2) is introduced, in particular stamped, into the layers (3, 4, 5, 6) perpendicularly to the longitudinal weld seam (8) of the inner layers (4, 5).

10. Method according to one of Claims 1 to 9, **characterized in that** the inner layers (4, 5) and the outer layers (3, 6) are produced from a single film layer, in particular a folded and/or severed film layer, or the inner layers (4, 5) are produced from a film layer, in particular a folded and/or severed film layer, and the outer layers (3, 6) are produced from a further film layer, in particular a folded and/or severed film layer, wherein in particular the film layer is unwound by a unwinding roller (16a, 16b, 16c).

11. Method according to one of Claims 1 to 10, **characterized in that** a respective part of the outer layer (3, 6) and/or a respective part of the inner layer (4, 5) is or has been configured as a label (12) for the item to be packaged, wherein, when the item to be packaged is being taken out of the pack (1), the label (12) remains on the item to be packaged, wherein in particular the shape of the labels (12) is introduced in each case before the longitudinal welding and/or the labels (12) are arranged in each case in the region of the compartments (7a, 7b, 7c, 7d, 7e, 7f).

12. Method according to one of the preceding claims, **characterized in that** a perforation or a preliminary cut is introduced at the edge of a label (12) for the purpose of removing the label (12) and the labels (12) are provided with a reactive adhesive on the side of the respective layer (3, 4, 5, 6) which faces in the direction of the item to be packaged.

13. Device (15a, 15b) for carrying out the method for producing packs (1) from plastic film for items to be packaged, in particular for containers, which packs have at least one compartment (7a, 7b, 7c, 7d, 7e, 7f), wherein two inner layers (4, 5) of plastic film that lie one on top of the other are welded together continuously or in cycles by way of at least one longitudinal weld seam (8), then at least two, further, outer layers (3, 6) of plastic film are placed onto the two welded-together inner layers (4, 5) and are fastened continuously or in cycles to these already welded-together inner layers (4, 5), wherein the layers (3, 4, 5, 6) to be welded together are welded together in a movement direction perpendicular to a feed direction (27) of the inner layers (4, 5) to be welded together, wherein, before an outer layer is fastened to the associated inner layer, the two inner layers (4, 5) are cut in each case in the region of the longitudinal weld seam (8) of the two inner layers (4, 5), with the result that these cut inner layers form a part of the inner layers and each part of the inner layers has a compartment for an item to be packaged, wherein furthermore, before an outer layer is fastened to the associated inner layer, a respective side compartment is introduced into the cut inner layers in the region of the cut longitudinal weld seam of the cut inner layers, **characterized in that** the device (15a, 15b) comprises at least one longitudinal welding bar or at least one longitudinal welding bar pair (22a, 22b, 22c) .

14. Device (15a, 15b) according to Claim 13, **characterized in that** the length of a longitudinal welding bar or the length of a longitudinal welding bar of a longitudinal welding bar pair (22a, 22b, 22c) is between 200 mm and 300 mm, preferably 250 mm, wherein in particular the longitudinal welding bar or the longitudinal welding bar pair (22a, 22b, 22c) is arranged in the device (1) perpendicularly to the feed direction (27) of the inner layers (4, 5) to be welded together.

15. Device (15a, 15b) according to either of Claims 13 and 14, **characterized in that** the device (15a, 15b) comprises at least one unwinding roller (16a, 16b, 16c) for feeding at least one film layer, or **in that** the device (15a, 15b) comprises at least one triangular folding means (18a, 18b, 18c), or **in that** the device (15a, 15b) comprises a winder (26) for winding up the packs (1) produced.

## Revendications

1. Procédé de fabrication d'emballages (1), comprenant au moins un compartiment (7a, 7b, 7c, 7d, 7e, 7f), en film plastique, destinés à des articles d'emballage, notamment des récipients, deux couches intérieures superposées (4, 5) en film plastique étant soudées de manière continue ou de manière cyclique avec au moins un joint de soudure longitudinal (8), puis au moins deux couches extérieures (3, 6) en film plastique étant appliquées sur les deux couches intérieures soudées (4, 5) et fixées de manière continue ou de manière cyclique à ces couches intérieures déjà soudées (4, 5), **caractérisé en ce que** les couches à souder (3, 4, 5, 6) sont soudées dans une direction de déplacement perpendiculairement à une direction d'alimentation (27) des couches intérieures à souder (4, 5) au moyen d'une barre de soudage longitudinale ou d'une paire de barres de soudage longitudinales (22a, 22b, 22c), les deux couches intérieures (4, 5) étant découpées à chaque fois dans la zone du joint de soudure longitudinal (8) des deux couches intérieures (4, 5) avant la fixation de la couche extérieure avec la couche intérieure associée, de telle sorte que ces couches intérieures découpées forment une partie des couches intérieures et que la partie des couches intérieures comprenne à chaque fois un compartiment pour un article d'emballage, un pli latéral étant en outre à chaque fois pratiqué dans la zone du joint de soudure longitudinal découpé des couches intérieures découpées dans les couches intérieures découpées avant la fixation de la couche extérieure avec la couche intérieure associée.

2. Procédé selon la revendication 1, **caractérisé en ce que** la couche extérieure (3, 6) est soudée avec au moins un joint de soudure longitudinal (9) avec les couches intérieures déjà soudées (4, 5), les deux couches intérieures déjà soudées auparavant (4, 5) étant séparées l'une de l'autre à l'aide d'au moins un moyen afin d'éviter un soudage des deux couches intérieures (4, 5), ou **en ce que** les couches à souder (3, 4, 5, 6) sont soudées dans une direction de déplacement perpendiculairement à la direction d'alimentation (27) des couches intérieures à souder (4, 5) au moyen de la barre de soudage longitudinale ou de la paire de barre de soudage longitudinales (22a, 22b, 22c), ou **en ce que** la couche extérieure (3, 6) est collée avec les couches intérieures déjà soudées (4, 5), de telle sorte que la couche extérieure (3, 6) soit fixée sur une des couches intérieures (4, 5).

3. Procédé selon la revendication 2, **caractérisé en ce qu'**en tant que moyen, un vernis de séparation est utilisé ou, en tant que moyen, un moyen de séparation mécanique, notamment un talon d'isolation (10), notamment en téflon, est utilisé.

4. Procédé selon la revendication 3, **caractérisé en ce que** le côté intérieur de la première couche intérieure (4) et/ou le côté intérieur de la deuxième couche intérieure (5) sont revêtus ou ont été revêtus avec un vernis de séparation, ou **en ce que** le talon d'isolation (10) est disposé entre les deux couches intérieures (4, 5) avant le soudage des deux couches intérieures (4, 5).

5. Procédé selon l'une quelconque des revendications 1 à 4, **caractérisé en ce que** les couches à souder (3, 4, 5, 6) sont soudées au moyen d'au moins une barre de soudage longitudinale ou au moyen d'au moins une paire de barres de soudage longitudinales (22a, 22b, 22c), ou **en ce que** la couche extérieure (3, 6) est encollée avant le collage avec un adhésif réactif, de préférence avec un thermofusible, ou la couche extérieure (3, 6) a été encollée avec un adhésif réactif, de préférence avec un thermofusible.

6. Procédé selon l'une quelconque des revendications 1 à 5, **caractérisé en ce que** les deux couches intérieures (4, 5) sont découpées à chaque fois dans la zone du joint de soudure longitudinal (8) des deux couches intérieures (4, 5) avant la fixation de la couche extérieure (3, 6) avec la couche intérieure associée (4, 5), de telle sorte que ces couches intérieures découpées (4, 5) forment une partie des couches intérieures (4, 5), un pli latéral (30) étant notamment pratiqué dans la zone du joint de soudure longitudinal découpé (8) des couches intérieures découpées (4, 5) dans les couches intérieures découpées (4, 5) avant la fixation de la couche extérieure (3, 6) avec la couche intérieure associée (4, 5).

7. Procédé selon la revendication 6, **caractérisé en ce que** les au moins deux couches intérieures découpées (4, 5) comprenant chacune le pli latéral (30) dans la zone du joint de soudure longitudinal (8) sont chacune positionnées l'une par rapport à l'autre à une largeur à fabriquer (B) de l'emballage (1) avant la fixation de la couche extérieure (3, 6) avec la couche intérieure associée (4, 5), les couches intérieures découpées (4, 5) étant notamment chacune pré-ouvertes avant la fixation de la couche extérieure (3, 6) avec la couche intérieure associée (4, 5).

8. Procédé selon l'une quelconque des revendications 1 à 7, **caractérisé en ce que**, sur l'autre côté des couches déjà soudées (4, 5), au moins une deuxième couche extérieure (3, 6) en film plastique est appliquée sur les couches intérieures déjà soudées (4, 5) et **en ce que** la deuxième couche extérieure supplémentaire (3, 6) est fixée avec la deuxième couche intérieure (4, 5), notamment soudée ou collée, les couches extérieures (3, 6) étant notamment appliquées de telle sorte que les deux couches extérieures (3, 6) soient appliquées avant la fixation de la couche extérieure (3, 6) avec la couche intérieure associée (4, 5).

9. Procédé selon l'une quelconque des revendications 1 à 8, **caractérisé en ce qu'**au moins une perforation de séparation (11) est pratiquée, notamment poinçonnée, dans au moins une couche (3, 4, 5, 6) parallèlement au joint de soudure longitudinal à souder (8) des couches intérieures (4, 5) ou **en ce qu'**au moins une perforation de rapport (2) est pratiquée, notamment poinçonnée, dans les couches (3, 4, 5, 6) perpendiculairement au joint de soudure longitudinal (8) des couches intérieures (4, 5).

10. Procédé selon l'une quelconque des revendications 1 à 9, **caractérisé en ce que** les couches intérieures (4, 5) et les couches extérieures (3, 6) sont fabriquées en une couche de film unique, notamment une couche de film repliée et/ou séparée, ou les couches intérieures (4, 5) sont fabriquées en une couche de film, notamment une couche de film repliée et/ou séparée, et les couches extérieures (3, 6) sont fabriquées en une couche de film supplémentaire, notamment une couche de film repliée et/ou séparée, la couche de film étant notamment déroulée d'un rouleau de déroulement (16a, 16b, 16c).

11. Procédé selon l'une quelconque des revendications 1 à 10, **caractérisé en ce qu'**à chaque fois une partie de la couche extérieure (3, 6) et/ou à chaque fois une partie de la couche intérieure (4, 5) a été ou est configurée en tant qu'étiquette (12) pour l'article d'emballage, l'étiquette (12) restant sur l'article d'emballage lorsque l'article d'emballage est extrait de l'emballage (1), la forme des étiquettes (12) étant notamment à chaque fois pratiquée avant le soudage longitudinal et/ou les étiquettes (12) étant à chaque fois agencées dans la zone des compartiments (7a, 7b, 7c, 7d, 7e, 7f).

12. Procédé selon l'une quelconque des revendications précédentes, **caractérisé en ce qu'**une perforation ou une prédécoupe pour l'extraction de l'étiquette (12) est pratiquée sur le bord d'une étiquette (12) et les étiquettes (12) sont munies d'un adhésif réactif sur le côté de la couche respective (3, 4, 5, 6), qui est orienté dans la direction de l'article d'emballage.

13. Dispositif (15a, 15b) pour la réalisation du procédé de fabrication d'emballages (1), comprenant au moins un compartiment (7a, 7b, 7c, 7d, 7e, 7f), en film plastique, destinés à des articles d'emballage, notamment des récipients, deux couches intérieures superposées (4, 5) en film plastique étant soudées de manière continue ou de manière cyclique avec au moins un joint de soudure longitudinal (8), puis au moins deux couches extérieures supplémentaires (3, 6) en film plastique étant appliquées sur les deux couches intérieures soudées (4, 5) et fixées de manière continue ou de manière cyclique à ces couches intérieures déjà soudées (4, 5), les couches à souder (3, 4, 5, 6) étant soudées dans une direction de déplacement perpendiculairement à une direction d'alimentation (27) des couches intérieures à souder (4, 5), les deux couches intérieures (4, 5) étant découpées à chaque fois dans la zone du joint de soudure longitudinal (8) des deux couches intérieures (4, 5) avant la fixation de la couche extérieure avec la couche intérieure associée, de telle sorte que ces couches intérieures découpées forment une partie des couches intérieures et que la partie des couches intérieures comprenne à chaque fois un compartiment pour un article d'emballage, un pli latéral étant en outre à chaque fois pratiqué dans la zone du joint de soudure longitudinal découpé des couches intérieures découpées dans les couches intérieures découpées avant la fixation de la couche extérieure avec la couche intérieure associée, **caractérisé en ce que** le dispositif (15a, 16b) comprend au moins une barre de soudage longitudinale ou au moins une paire de barres de soudage longitudinales (22a, 22b, 22c).

14. Dispositif (15a, 15b) selon la revendication 13, **caractérisé en ce que** la longueur d'une barre de soudage longitudinale ou la longueur d'une barre de soudage longitudinale d'une paire de barres de soudage longitudinales (22a, 22b, 22c) est entre 200 mm et 300 mm, de préférence 250 mm, les barres de soudage longitudinales ou la barre de soudage longitudinale (22a, 22b, 22c) étant notamment agencée perpendiculairement à la direction d'alimentation (27) des couches intérieures à souder (4, 5) dans le dispositif (1).

15. Dispositif (15a, 15b) selon l'une quelconque des revendications 13 ou 14, **caractérisé en ce que** le dispositif (15a, 15b) comprend au moins un rouleau de déroulement (16a, 16b, 16c) pour l'alimentation d'au moins une couche de film, ou **en ce que** le dispositif (15a, 15b) comprend au moins un triangle de pliage (18a, 18b, 18c), ou **en ce que** le dispositif (15a, 15b) comprend un enrouleur (26) pour l'enroulement des emballages fabriqués (1).
